# EUROPEAN PATENT APPLICATION

(11) **EP 2 357 691 A1**
(43) Date of publication of application: **17.08.2011**
(21) Application number: 09824650.7
(22) Date of filing: 25.06.2009
(51) Int. Cl.: H01M 4/48, C01G 23/00, C01G 33/00, H01M 4/36, H01M 4/58

(54) **NONSTOICHIOMETRIC TITANIUM COMPOUND, CARBON COMPOSITE OF THE SAME, METHOD FOR PRODUCING THE COMPOUND, NEGATIVE ELECTRODE ACTIVE MATERIAL FOR LITHIUM ION SECONDARY BATTERY CONTAINING THE COMPOUND, AND LITHIUM ION SECONDARY BATTERY USING THE NEGATIVE ELECTRODE ACTIVE MATERIAL**

(30) Priority: 04.11.2008 JP 2008283776
(71) Applicant: Incorporated National University Iwate University, Morioka-shi, Iwate 020-8550 (JP)
(72) Inventor: KUMAGAI, Naoaki, Morioka Iwate 020-8550 (JP); KADOMA, Yoshihiro, Morioka Iwate 020-8550 (JP); YOSHIKAWA, Daisuke, Morioka Iwate 020-8550 (JP)
(74) Representative: Grünecker, Kinkeldey, Stockmair & Schwanhäusser Anwaltssozietät
(86) International application number: PCT/JP2009/061645
(87) International publication number: WO 2010/052950

(57) **Abstract**

Provided is a highly safe lithium-ion secondary battery with a gradual voltage decrease, high charge/discharge capacity, and ease of handling, in which explosion due to expansion, heat generation, ignition, and the like is prevented. A non-stoichiometric titanium compound represented by a chemical formula Li₄₊ₓTi₅₋ₓO₁₂ (where 0<x<0.30), a non-stoichiometric titanium compound represented by a chemical formula Li₉₊ₓTi_{5-x-y}Nb_{y}O₁₂ (where 0<x<0.30, 0<y<0.20) , and carbon-composite non-stoichiometric titanium compounds Li₄₊ₓTi₅₋ₓO₁₂/C (where 0<x<0.30) and Li₄₊ₓTi_{5-x-y}Nb_{y}O₁₂/C (where 0<x<0.30, 0<y<0.20) obtained by applying a carbon composite-forming process thereto, an active material of negative electrode for a lithium-ion secondary battery using the compound, and a lithium-ion secondary battery using the active material of negative electrode.

## Description

### Technical Field

The present invention relates to a non-stoichiometric titanium compound, a carbon composite thereof, a manufacturing method of the compound, an active material of negative electrode for a lithium-ion secondary battery containing the compound, and a lithium-ion secondary battery using the active material of negative electrode; and more particularly relates to a non-stoichiometric titanium compound in a high crystalline single phase, a carbon composite thereof, a manufacturing method of the compound, an active material of negative electrode for a lithium-ion secondary battery containing the compound, and a lithium-ion secondary battery using the active material of negative electrode.

### Background Art

Lithium-ion secondary batteries are widely used mainly for electronic devices such as mobile devices. This is because lithium-ion secondary batteries have a higher voltage as well as a larger charge/discharge capacity, and less likely to have unfavorable influence caused by a memory effect and the like, compared to nickel cadmium batteries and the like.
Size and weight of electronic devices and the like are getting smaller, and accordingly as batteries to be installed in these electronic devices and the like, lithium-ion secondary batteries with smaller size and weight are developed. For example, development of thin and compact lithium-ion secondary batteries capable of being installed on IC cards and medical compact devices, as well as development of lithium-ion secondary batteries for hybrid vehicles and electric vehicles and the like are in progress. It is expected that even thinner and smaller ones will be required in the future.

Moreover, lithium-ion secondary batteries have an excellent energy density, power density, and the like. So, they are employed to many mobile electronic devices such as laptops and cellular phones, and thus it is expected that lithium-ion secondary batteries will be applied to electric vehicles and electric power storage systems in the future. However, lithium-ion secondary batteries accompany the risks such as leakage of electrolyte and explosion caused by thermal expansion. So, they have an aspect of incompleteness in terms of safety and high thermal stability. For example, in the case of an ordinary lithium-ion secondary battery using a liquid electrolyte, the upper limit of temperature up to which the battery can operate is approximately 80°C. Once the temperature exceeds the upper limit, battery characteristics degrade and unexpected incidents may occur due to thermal expansion. It is suggested that a main cause for these incidents is a carbon negative electrode of the lithium-ion secondary battery; that a very active lithium metal powder is apt to be deposited because of a film of a solid electrolyte interface (SEI) having a low thermal stability formed on a surface of negative electrode particles as a result of a decomposition reaction of an electrolytic solution when a lithium ions are intercalated into the carbon negative electrode, and because of the intercalation potential of the lithium ion as low as 0.085V vs.Li/Li⁺.

In order to solve this problem, Li₄Ti₅O₁₂, which is a non-combustible metal oxide, is gaining attention as a new negative electrode material instead of the carbon negative electrode. Since the lithium ion intercalation/deintercalation reaction of Li₄Ti₅O₁₂ presents a flat potential at higher potential close to 1.55V vs. Li/Li⁺, it is free from the lithium metal deposition and SEI films are hardly formed on the electrode surface. Moreover, there is little volume change due to the lithium ion intercalation/deintercalation reaction, and Li₄Ti₅O₁₂ thus has a fairly excellent cycle characteristic. Therefore, with the negative electrode employing Li₄Ti₅O₁₂, highly safety batteries can be designed compared to the batteries employing the carbon material as a negative electrode.

However, Li₄Ti₅O₁₂ has a problem that, on the synthesis thereof, it is obtained as a mixture including rutile-type TiO₂ (referred to as r-TiO₂ hereinafter) and Li₂TiO₃, which contributes to degradation of battery performance, and this makes it difficult to synthesize a single phase. In general, a range within which Li₄Ti₅O₁₂ having a certain stoichiometric composition can be synthesized is very narrow, and it is known that Li₄Ti₅O₁₂ is obtained as a mixture along with r-TiO₂ or Li₂TiO₃ depending on a ratio of lithium to titanium (refer to a non-patent document 1). In published papers and commercially available products, Li₄Ti₅O₁₂ exists as a mixture therewith. Moreover, Li₄Ti₅O₁₂ has low electronic conductivity (10⁻¹³Scm⁻¹). This poses a problem that, with Li₄Ti₅O₁₂ as active material of negative electrode, the electric capacity decreases during discharge especially at a large current.

In order to solve this problem, techniques for improving battery characteristics by compounding Li₄Ti₅O₁₂ with electrically conductive materials such as carbon (non-patent document 2), silver (non-patent document 3), and copper oxide (non-patent document 4), by replacing a part of a lithium component with magnesium (non-patent document 5), and by replacing a part of a titanium component with tantalum (non-patent document 6), aluminum (non-patent document 7), and vanadium (non-patent document 8) have been proposed.

Moreover, the patent document 1 discloses amorphous Li₄(Ti₅₋ₓNbₓ)O₁₂ (where 0<x<5) formed by sputtering as an active material of negative electrode for a lithium-ion secondary battery, and shows that Li₄(Ti₂Nb₃)O₁₂ among them presents an excellent characteristics as a negative electrode for thin-film lithium-ion secondary battery.

Patent document 1: Japanese Patent Application Publication No.2008-159399

Non-patent document 1: G. Izquierdo, A. R. West, Mat. Res. Bull., 15, 1655 (1980).
Non-patent document 2: L. Cheng, X. L. Li, H. J. Liu, H. M. Xiong, P. W. Zhang, Y. Y. Xia, J. Electrochem. Soc., 154, A692 (2007).
Non-patent document 3: S.Huang, Z.Wen, J.Zhang, Z.Gu, X.Xu, Solid State Ionics, 177, 851 (2006).
Non-patent document 4:S. H. Huang, Z. Y. Wen, B. Lin, J. D. Han, X. G. Xu., J. Alloys Compd., 457, 400 (2008).
Non-patent document 5: C. H. Chen, J. T. Vaughey, A. N. Jansen, D. W. Dees, A. J. Kahaian, T. Goacher, M. M. Thackeray, J. Electrochem. Soc., 148, A102 (2001).
Non-patent document 6: J. Wolfenstine, J. L. Allen, J. Power Sources, 180, 582 (2008).
Non-patent document 7: S. H. Huang, Z. Y. Wen, X. J. Zhu, Z. X. Lin, J. Electrochem. Soc., 152, A186 (2005).
Non-patent document 8: A. Y. Shenouda, K. R. Murali, J. Power Sources, 176, 332 (2008).

### Summary of the Invention

### Problems to be Solved by the Invention

Li₄Ti₅O₁₂ is synthesized generally through a solid state reaction method, but this method poses a problem that r-TiO₂ and Li₂TiO₃, which are impurity phases, are apt to be generated due to a heterogeneous reaction among starting materials and a lithium loss caused by calcining for a long period in this method. Further, the synthesis through the solid state reaction method causes a large particle size and thus the distribution thereof is apt to extend. Moreover, there is a further problem that the electronic conductivity of Li₄Ti₅O₁₂ itself is quite low. These problems have a large effect on the charge/discharge characteristic of Li₄Ti₅O₁₂, leading to degradation of the battery characteristics.

The techniques disclosed in the non-patent documents 1 to 7 provide materials with a higher electronic conductivity, but lithium-ion secondary batteries obtained through these techniques do not provide satisfactory performances in terms of the charge/discharge characteristic and the like thereof. Moreover, although the technique according to the patent document 1 discloses Li₄(Ti₂Nb₃)O₁₂, what is produced through the sputtering method is a thin-film specimen. Since it does not experience heat treatment, an amorphous film is obtained. In the case of the amorphous film, metallic lithium may be deposited. Therefore, a compound with a high crystallinity without depositing lithium has been needed.

The inventors of the present invention employed the spray dry method, which is a kind of the aqueous preparation method, and newly synthesized a non-stoichiometric titanium compound successfully, formed in a high crystalline single phase represented by a non-stoichiometric composition formula Li₄₊ₓTi₅₋ₓO₁₂ (where 0<x<0.30), by properly selecting a Li/Ti ratio at the start. Further, by replacing a part of titanium thereof with niobium atoms, a single phase with a high crystallinity represented by Li₄₊ₓTi_{5-x-y}Nb_{y}O₁₂ (where 0<x<0.30, 0<y<0.20) could newly be synthesized. Moreover, the inventors successfully synthesized a carbon composite using, as a carbon source, dicarboxylic acid compound the carbon number of which is at least four, by spraying and drying a raw material solution thereof through the spray dry method, and then calcining under proper conditions. The inventors found out that, in the case where these synthesized specimens were used as the electrode, excellent battery characteristics were obtained.

It is an object of the present invention to provide a novel non-stoichiometric titanium compound consisting of a single phase with a high crystallinity and a high thermal stability, as well as a carbon composite thereof. It is another object of the present invention to provide a highly safe lithium-ion secondary battery, with a gradual voltage decrease, high charge/discharge capacity, and ease of handling, in which explosion due to expansion, heat generation, ignition, and the like is prevented, by applying the novel non-stoichiometric titanium compound and the carbon composite thereof to an active material of negative electrode for the lithium-ion secondary battery.

### Means for Solving the Problems

The problems described above are solved by obtaining a non-stoichiometric titanium compound represented by a chemical formula Li₄₊ₓTi₅₋ₓO₁₂ (where 0<x<0.30). Moreover, the problems are solved by obtaining a non-stoichiometric titanium compound represented by a chemical formula Li₄₊ₓTi_{5-x-y}Nb_{y}O₁₂ (where 0<x<0.30, 0<y<0.20).

These non-stoichiometric titanium compounds are not in the form of conventionally-known amorphous thin films. These are obtained as novel non-stoichiometric titanium compounds in a single phase with a high crystallinity, and provide higher electronic conductivity compared to that of the amorphous films.

Further, the problems are solved by obtaining a carbon composite of a non-stoichiometric titanium compound, in which a carbon composite-forming process is applied to a non-stoichiometric titanium compound represented by a chemical formula Li₄₊ₓTi₅₋ₓO₁₂ (where 0<x<0.30) using, as a carbon source, dicarboxylic acid the carbon number of whiccalcining step of heat treatingh is at least four. Moreover, the problems are solved by obtaining a carbon composite of a non-stoichiometric titanium compound, in which a carbon composite-forming process is applied to a non-stoichiometric titanium compound represented by a chemical formula Li₄₊ₓTi_{5-x-y}Nb_{y}O₁₂ (where 0<x<0.30, 0<y<0.20) using, as a carbon source, dicarboxylic acid the carbon number of which is at least four.

Accordingly, in the case where they are used as an active material of negative electrode for a lithium-ion secondary battery, the charge/discharge characteristic and the cycle characteristics of the obtained lithium-ion secondary battery can be improved.

Moreover, the problems are solved by a manufacturing method of a non-stoichiometric titanium compound represented by a chemical formula Li₄₊ₓTi₅₋ₓO₁₂ (where 0<x<0.30), the method including a solution step of dissolving by adding and agitating oxalic acid, lithium salt, and titanium alkoxide in given quantities in the existence of water, a precursor formation step of obtaining a precursor by spraying and drying the solution obtained in the solution step by means of a spray drier, and a calcining step of heat treating the precursor obtained in the precursor formation step in a furnace at 700 to 900°C for a given period.

Moreover, these problems are solved by a manufacturing method of a carbon composite of a non-stoichiometric titanium compound represented by a chemical formula Li₄₊ₓTi₅₋ₓO₁₂ (where 0<x<0.30), the method including a solution step of dissolving by adding and agitating dicarboxylic acid the carbon number of which is at least four, lithium salt, and titanium alkoxide in given quantities in the existence of water, a precursor formation step of obtaining a precursor by spraying and drying the solution obtained in the solution step by means of a spray drier, and a calcining step of heat treating the precursor obtained in the precursor formation step in a reducing atmosphere or in an inert atmosphere in a furnace at 800 to 900°C for a given period.

Moreover, the problems are solved by a manufacturing method of a non-stoichiometric titanium compound represented by a chemical formula Li₄₊ₓTi_{5-x-y}Nb_{y}O₁₂ (where 0<x<0.30, 0<y<0.20), the method including a solution step of dissolving by adding and agitating oxalic acid, lithium salt, titanium alkoxide, and niobium alkoxide in given quantities in the existence of water, a precursor formation step of obtaining a precursor by spraying and drying the solution obtained in the solution step by means of a spray drier, and a calcining step of heat treating the precursor obtained in the precursor formation step in a furnace at 600 to 900°C for a given period.

Moreover, the problems are solved by a manufacturing method of a carbon composite of a non-stoichiometric titanium compound represented by a chemical formula Li₄₊ₓTi_{5-x-y}Nb_{y}O₁₂ (where 0<x<0.30, 0<y<0.20), the method including a solution step of dissolving by adding and agitating dicarboxylic acid the carbon number of which is at least four, lithium salt, titanium alkoxide, and niobium alkoxide in given quantities in the existence of water, a precursor formation step of obtaining a precursor by spraying and drying the solution obtained in the solution step by means of a spray drier, and a calcining step of heat treating the precursor obtained in the precursor formation step in a reducing atmosphere or in an inert atmosphere in a furnace at 800 to 900°C for a given period.

If the non-stoichiometric titanium compound is formed by an amorphous film, lithium may be deposited. A non-stoichiometric titanium compound with a high crystallinity without depositing lithium has thus been needed. Therefore, the manufacturing method of the non-stoichiometric titanium compounds and the carbon composites of the non-stoichiometric titanium compounds can provide a non-stoichiometric titanium compound having a single phase with higher crystallinity compared to that of an amorphous non-stoichiometric titanium compound obtained through the sputtering method, by obtaining a precursor by spraying and drying a raw material solution using a spray drier, and then heat treating the precursor under proper conditions. Moreover, in a solution step of adjusting the raw material solution, by changing the molar ratio of titanium alkoxide and niobium alkoxide to be added thereto, the chemical composition of the non-stoichiometric titanium compounds and the carbon composites thereof can be controlled.

Further, according to the present invention, the problems are solved by an active material of negative electrode for a lithium-ion secondary battery, including a non-stoichiometric titanium compound represented by a chemical formula Li₄₊ₓTi₅₋ₓO₁₂ (where 0<x<0.30). Moreover, the problems are solved by an active material of negative electrode for a lithium-ion secondary battery, including a non-stoichiometric titanium compound represented by a chemical formula Li₄₊ₓTi_{5-x-y}Nb_{y}O₁₂ (where 0<x<0.30, 0<y<0.20).

Further, the problems are solved by an active material of negative electrode for a lithium-ion secondary battery, including a carbon composite of a non-stoichiometric titanium compound obtained by applying a carbon composite-forming process to a non-stoichiometric titanium compound represented by a chemical formula Li₄₊ₓTi₅₋ₓO₁₂ (where 0<x<0.30) using, as a carbon source, dicarboxylic acid the carbon number of which is at least four.

Further, the problems are solved by an active material of negative electrode for a lithium-ion secondary battery, including a carbon composite of a non-stoichiometric titanium compound obtained by applying a carbon composite-forming process to a non-stoichiometric titanium compound represented by a chemical formula Li₄₊ₓTi_{5-x-y}Nb_{y}O₁₂ (where 0<x<0.30, 0<y<0.20) using, as a carbon source, dicarboxylic acid the carbon number of which is at least four.

In this way, by using, as an active material of negative electrode for a lithium-ion secondary battery, the non-stoichiometric titanium compound Li₄₊ₓTi₅₋ₓO₁₂ (where 0<x<0.30), the non-stoichiometric titanium compound Li₄₊ₓTi_{5-x-y}Nb_{y}O₁₂ (where 0<x<0.30, 0<y<0.20), the carbon composite of Li₄₊ₓTi₅₋ₓO₁₂ (where 0<x<0.30), and the carbon composite of Li₄₊ₓTi_{5-x-y}Nb_{y}O₁₂ (where 0<x<0.30, 0<y<0.20), gradual voltage decrease and a larger charge/discharge capacity can be obtained, compared to the publicly-known active material of negative electrodes such as lithium-titanium oxide. Thus, the non-stoichiometric titanium compounds and the carbon composites thereof according to the present invention are especially preferable in the applications such as lithium-ion secondary batteries, for which a stable high voltage for a long period, a high power density, a large charge/discharge capacity, and safety are required.
Moreover, since the active material of negative electrode for a lithium-ion secondary battery according to the present invention is tolerant to water and oxidization, and is hardly toxic, it is easy to handle and presents a stable charge/discharge characteristic for a long period.

Moreover, according to the present invention, the problems are solved by a lithium-ion secondary battery including a current collector layer of positive electrode, an active material layer of positive electrode, an electrolyte layer, an active material layer of negative electrode, and a current collector layer of negative electrode; the active material layer of negative electrode including an active material of negative electrode for a lithium-ion secondary battery containing a non-stoichiometric titanium compound represented by a chemical formula Li₄₊ₓTi₅₋ₓO₁₂ (where 0<x<0.30). Further, the problems are solved by a lithium-ion secondary battery including a current collector layer of positive electrode, an active material layer of positive electrode, an electrolyte layer, an active material layer of negative electrode, and a current collector layer of negative electrode; the active material layer of negative electrode including an active material of negative electrode for a lithium-ion secondary battery containing a non-stoichiometric titanium compound represented by a chemical formula Li₄₊ₓTi_{5-x-y}Nb_{y}O₁₂ (where 0<x<0.30, 0<y<0.20).

Further, the problems are solved by a lithium-ion secondary battery including a current collector layer of positive electrode, an active material layer of positive electrode, an electrolyte layer, an active material layer of negative electrode, and a current collector layer of negative electrode; the active material layer of negative electrode including an active material of negative electrode for a lithium-ion secondary battery containing a carbon composite of a non-stoichiometric titanium compound obtained by applying carbon composite-forming process to a non-stoichiometric titanium compound represented by a chemical formula Li₄₊ₓTi₅₋ₓO₁₂ (where 0<x<0.30) using, as a carbon source, dicarboxylic acid the carbon number of which is at least four.

Further, the problems are solved by a lithium-ion secondary battery including a current collector layer of positive electrode, an active material layer of positive electrode, an electrolyte layer, an active material layer of negative electrode, and a current collector layer of negative electrode; the active material layer of negative electrode including an active material of negative electrode for a lithium-ion secondary battery containing a carbon composite of a non-stoichiometric titanium compound obtained by applying carbon composite-forming process to a non-stoichiometric titanium compound represented by a chemical formula Li₄₊ₓTi_{5-x-y}Nb_{y}O₁₂ (where 0<x<0.30, 0<y<0.20) using, as a carbon source, dicarboxylic acid the carbon number of which is at least four.

In this way, by using the novel non-stoichiometric titanium compound Li₄₊ₓTi₅₋ₓO₁₂ (where 0<x<0.30), non-stoichiometric titanium compound Li₄₊ₓTi_{5-x-y}Nb_{y}O₁₂ (where 0<x<0.30, 0<y<0.20), carbon composite of Li₄₊ₓTi₅₋ₓO₁₂ (where 0<x<0.30), and carbon composite of Li₄₊ₓTi_{5-x-y}Nb_{y}O₁₂ (where 0<x<0.30, 0<y<0.20) as an active material of negative electrode for a lithium-ion secondary battery, because of thus increased electronic conductivity, a highly safe lithium-ion secondary battery having a high thermal stability can be obtained in addition to an improved charge/discharge characteristic.

On this occasion, for the active material layer of positive electrode one or more oxides selected from the group consisting of spinel type lithium manganese oxide (LiMn₂O₄), spinel type lithium manganese nickel oxide (LiMn_{1.5}Ni_{0.5}O₄), lithium cobalt oxide (LiCoO₂), lithium nickel oxide (LiNiO₂), lithium nickel cobalt manganese oxide (LiNi_{1/3}Mn_{1/3}Co_{1/3}O₂), and lithium iron phosphate (LiFePO₄) can preferably be used.

In this way, by using these compounds, which tend to intercalate/deintercalate lithium ions, as an active material layer of positive electrode, it is possible to insert/deinsert many lithium ions into/from the active material layer of positive electrode. It is thus possible to further improve the charge/discharge characteristic of lithium-ion secondary batteries.

### Effects of the Invention

According to the invention of claim 1 of the present invention, a novel non-stoichiometric titanium compound consisting of a single phase with a high crystallinity can be obtained by obtaining Li₄₊ₓTi₅₋ₓO₁₂ (where 0<x<0.30).
Moreover, according to the invention of claim 2, a novel non-stoichiometric titanium compound consisting of a single phase with a high crystallinity can be obtained by obtaining the non-stoichiometric titanium compound Li₄₊ₓTi_{5-x-y}Nb_{y}O₁₂ (where 0<x<0.30, 0<y<0.20).
Further, according to the invention of claim 3, a carbon composite of Li₄₊ₓTi₅₋ₓO₁₂ (where 0<x<0.30) is obtained. According to the invention of claim 4, a carbon composite of Li₄₊ₓTi_{5-x-y}Nb_{y}O₁₂ (where 0<x<0.30, 0<y<0.20) is obtained. By using them as active materials of negative electrode for a lithium-ion secondary battery, the charge/discharge characteristics and the cycling characteristics of the lithium-ion secondary batteries can be improved.
Moreover, according to the inventions of claims 5 to 8, a non-stoichiometric titanium compound consisting of a single phase with a higher crystallinity and a carbon composite thereof are obtained by heat treating at a high temperature different from a non-stoichiometric titanium compound in the form of an amorphous film obtained through the sputtering method and the like.
Further, according to the inventions of claims 9 to 12, by using a novel non-stoichiometric titanium compound and a carbon composite thereof as the active material of negative electrode for a lithium-ion secondary battery, a gradual voltage decrease and a larger charge/discharge capacity can be obtained.
Further, according to the inventions of claims 13 to 16, in a lithium-ion secondary battery including a current collector layer of positive electrode, an active material layer of positive electrode, an electrolyte layer, an active material layer of negative electrode, and a current collector layer of negative electrode, by using, as the active material of negative electrode for a lithium-ion secondary battery according to claims 9 to 12, the active material layer of negative electrode, a highly safe lithium-ion secondary battery having a high charge/discharge performance and a high thermal stability is obtained .
Moreover, according to the invention of claim 17, in a lithium-ion secondary battery, by properly selecting the positive electrode active material, a lithium-ion secondary battery having an improved charge/discharge characteristic can be obtained.

### Brief Description of the Drawings

[Fig.1] A schematic cross sectional view of a lithium-ion secondary battery according to an embodiment of the present invention.
[Fig.2] A diagram showing XRD patterns according to an example 1-1 of the present invention.
[Fig.3] A chart of initial charge/discharge curves according to the example 1-1 of the present invention.
[Fig.4] A chart of cycle characteristics according to the example 1-1 of the present invention.
[Fig.5] A diagram showing XRD patterns according to an example 1-2 of the present invention.
[Fig.6] A chart showing particle size distributions according to the example 1-2 of the present invention.
[Fig.7] A chart of initial charge/discharge curves according to the example 1-2 of the present invention.
[Fig.8] A chart of the cycle characteristics according to the example 1-2 of the present invention.
[Fig.9] A diagram showing XRD patterns according to an example 2-1 of the present invention.
[Fig.10] A chart showing particle size distributions according to the example 2-1 of the present invention.
[Fig.11] A chart of initial charge/discharge curves according to the example 2-1 of the present invention.
[Fig.12] A chart of the cycle characteristics according to the example 2-1 of the present invention.
[fig.13] A diagram showing XRD patterns according to an example 2-2 of the present invention.
[Fig.14] A chart of initial charge/discharge curves according to the example 2-2 of the present invention.
[Fig.15] A chart of the cycle characteristics according to the example 2-2 of the present invention.
[fig.16] A diagram showing XRD patterns according to an example 3-1 of the present invention.
[Fig.17] A chart of initial charge/discharge curves according to the example 3-1 of the present invention.
[Fig.18] A chart of the cycle characteristics according to the example 3-1 of the present invention.
[Fig.19] A diagram showing XRD patterns according to an example 3-2 of the present invention.
[Fig.20] A chart of initial charge/discharge curves according to the example 3-2 of the present invention.
[Fig.21] A chart of the cycle characteristics according to the example 3-2 of the present invention.
[Fig.22] A diagram showing XRD patterns according to the example 3-3 of the present invention.
[Fig.23] A chart of initial charge/discharge curves according to the example 3-3 of the present invention.
[Fig.24] A chart of the cycle characteristics according to an example 3-3 of the present invention.
[Fig.25] A diagram showing XRD patterns according to an example 4-1 of the present invention.
[Fig.26] A chart of initial charge/discharge curves according to the example 4-1 of the present invention.
[Fig.27] A chart of the cycle characteristics according to the example 4-1 of the present invention.

### Description of Reference Numerals

- 1: Lithium-ion secondary battery
- 11: Positive electrode can
- 12: Negative electrode terminal
- 13: Current collector layer of negative electrode
- 14: Current collector layer of positive electrode
- 15: Separator holding electrolytic solution
- 16: Active material layer of negative electrode
- 17: Active material layer of positive electrode
- 18: Gasket

### Best Mode for Carrying Out the Invention

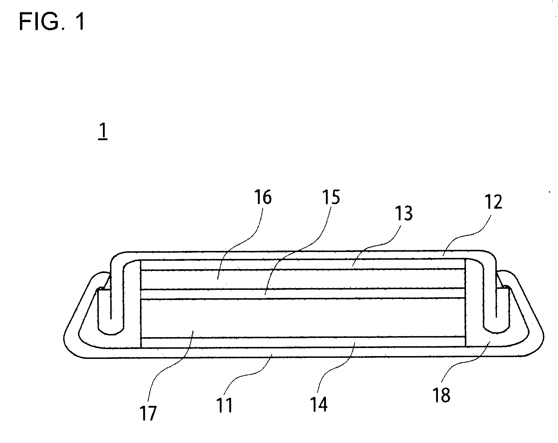

A description will now be given of a non-stoichiometric titanium compound, a carbon composite thereof, an active material of negative electrode for a lithium-ion secondary batteries containing the compounds, and a lithium-ion secondary battery using the active material of negative electrode according to embodiments of the present invention, with reference to Figs. 1 to 27. Members, arrangements, configurations, and the like described below are not intended to limit the present invention, and may be modified in various manners within the scope of the purport of the present invention.

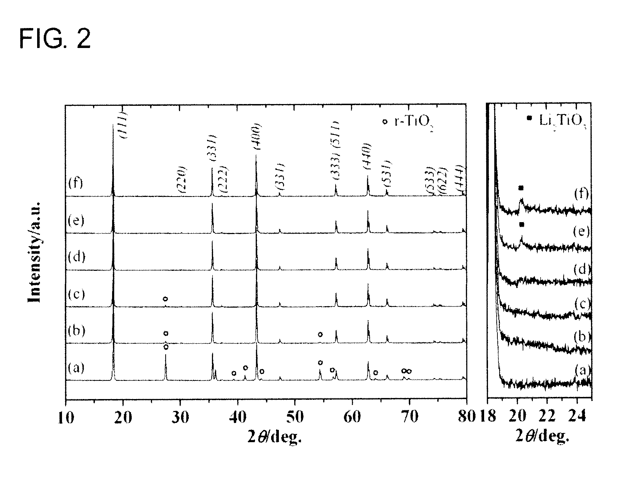

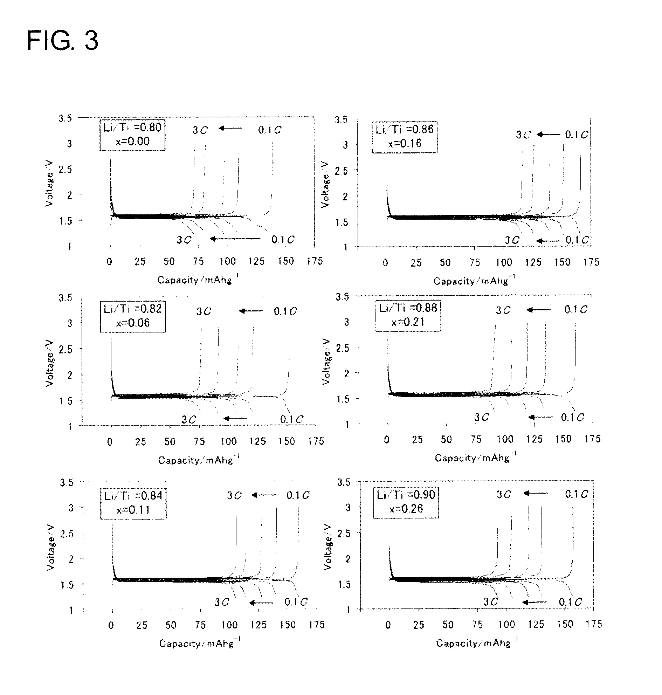

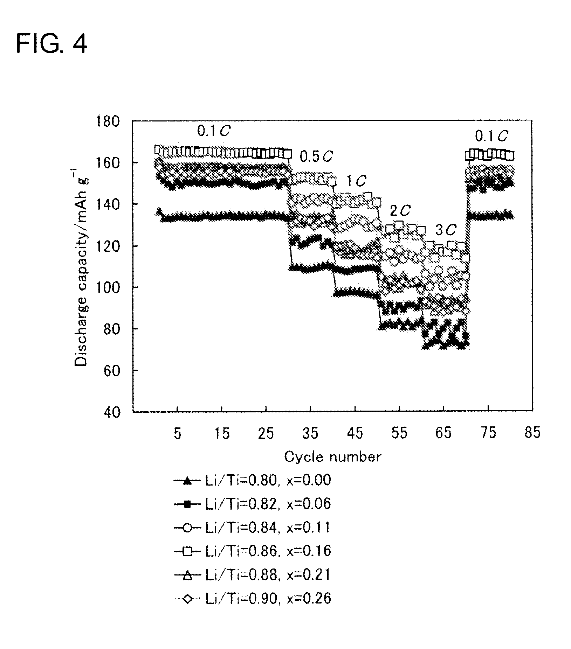

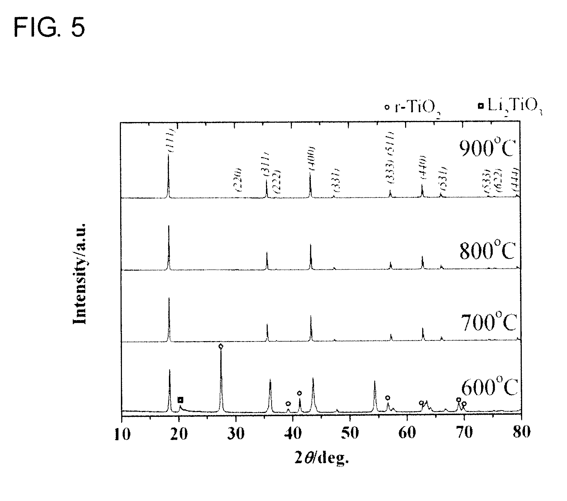

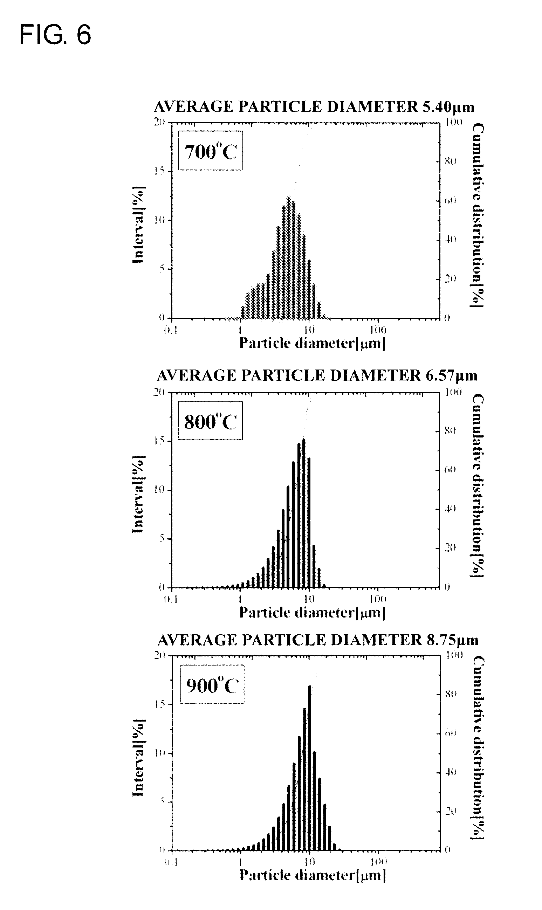

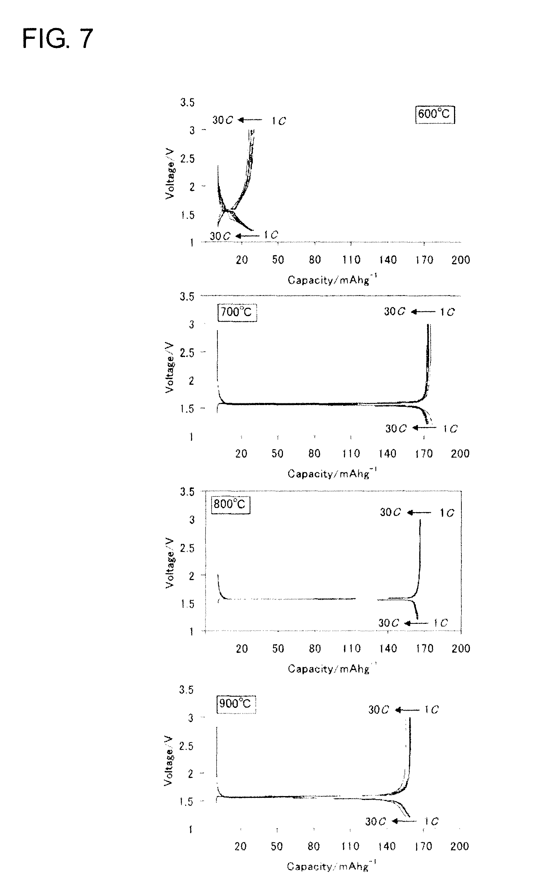

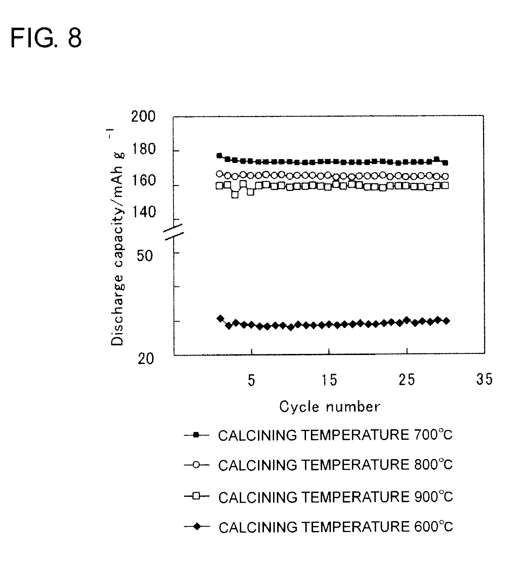

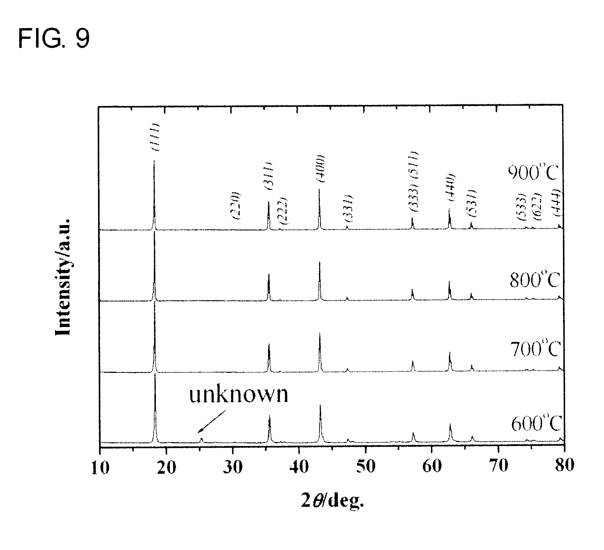

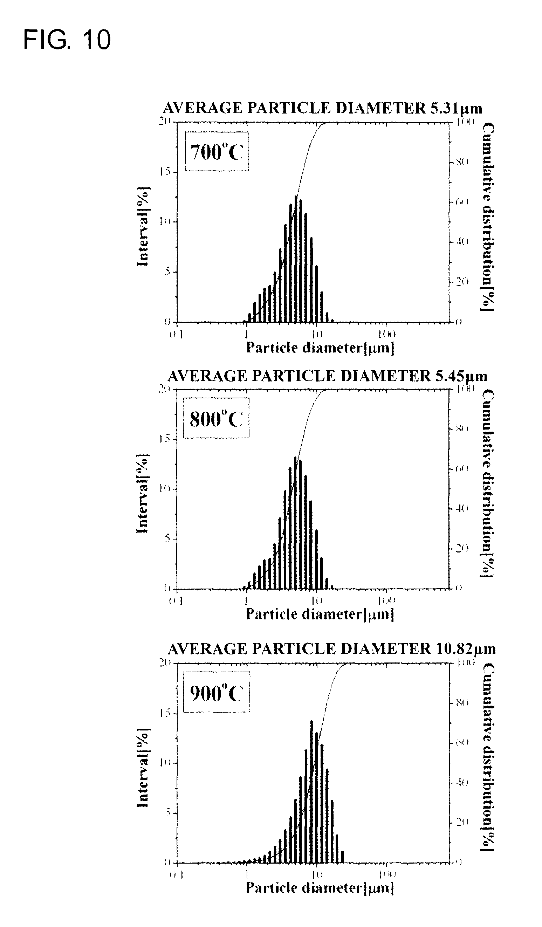

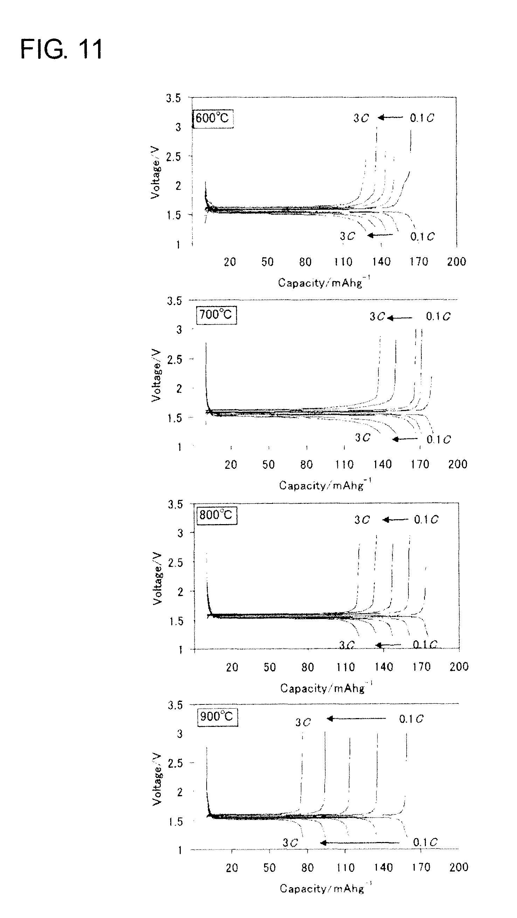

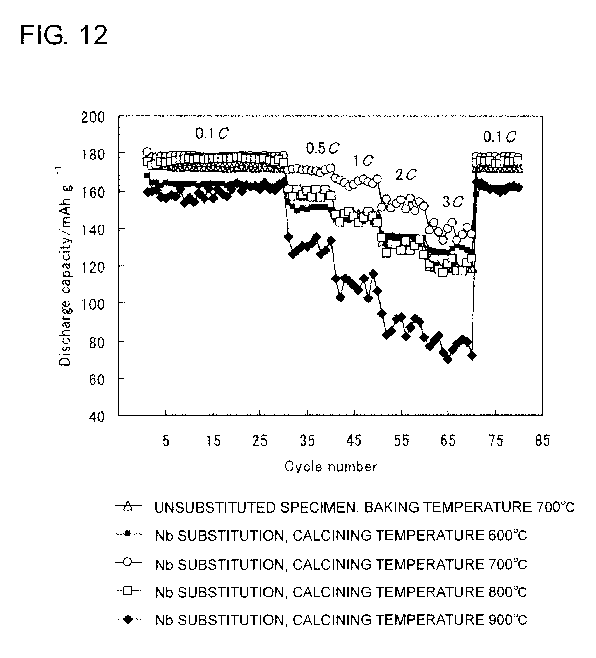

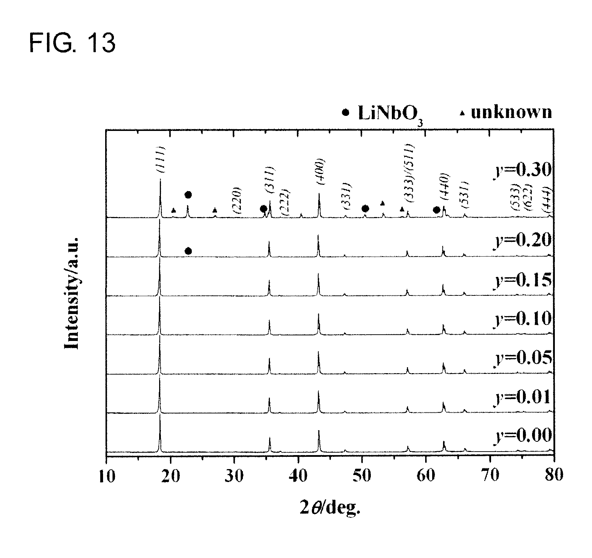

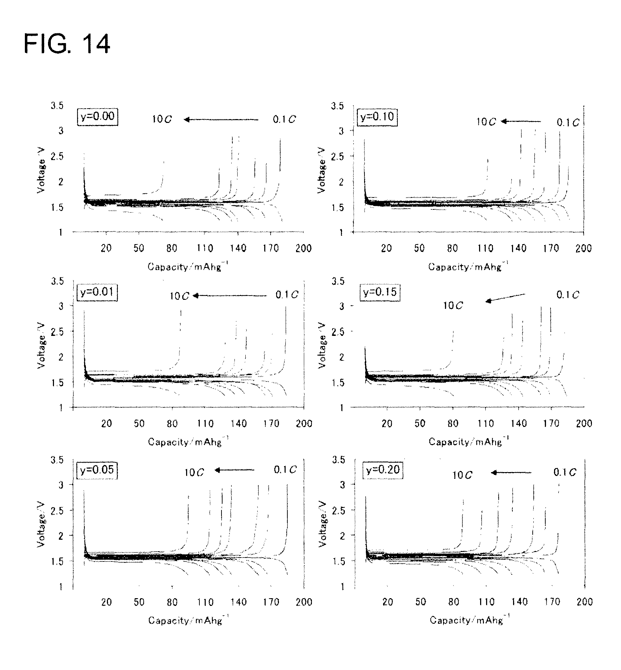

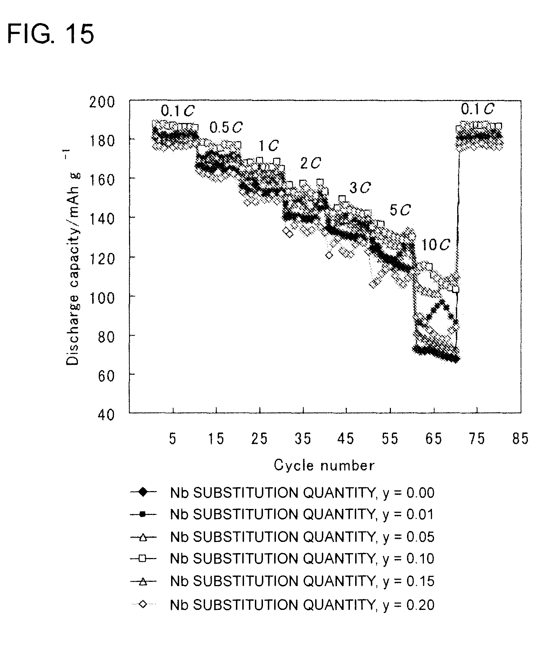

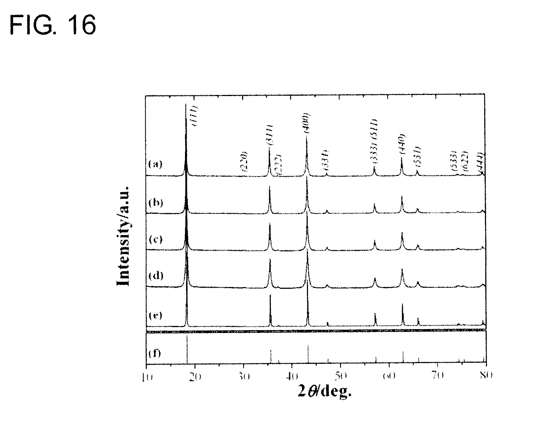

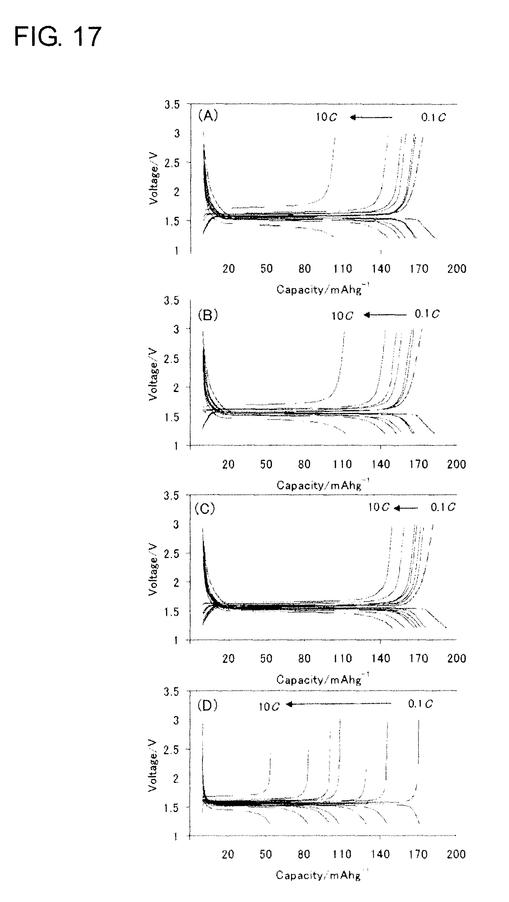

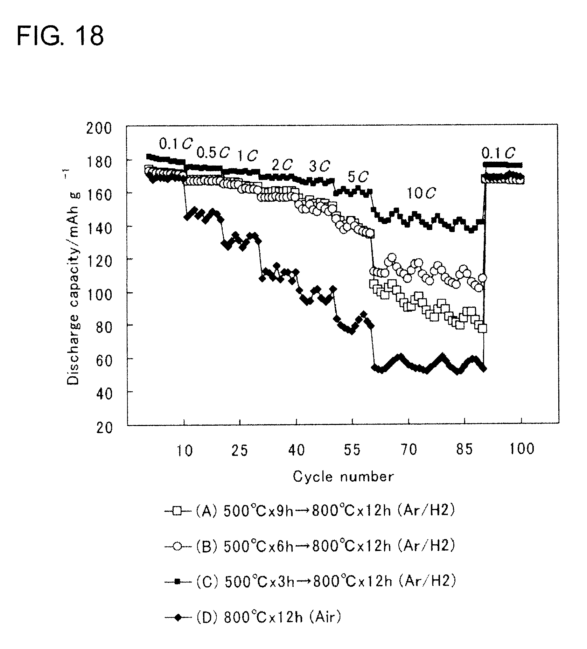

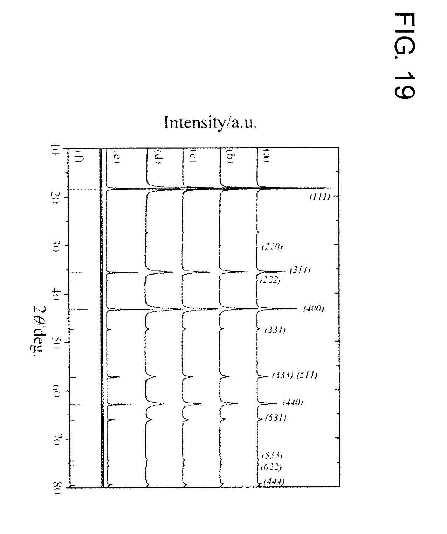

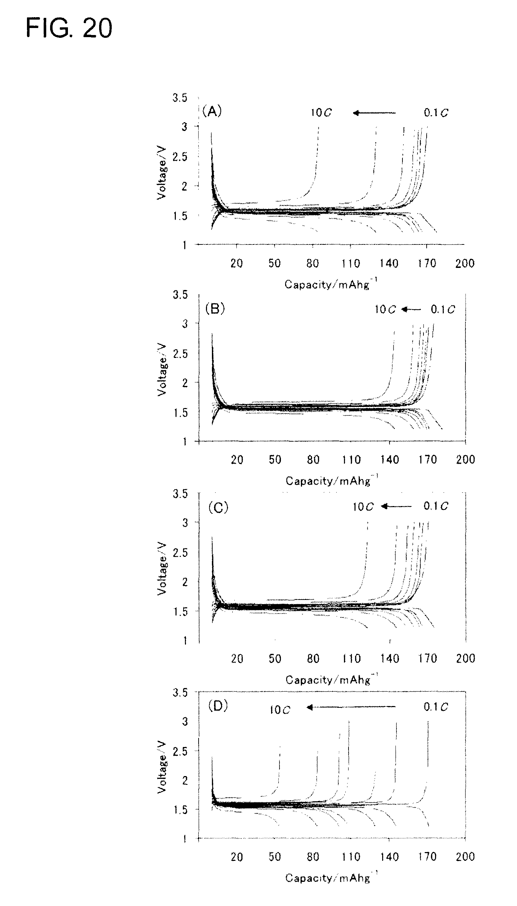

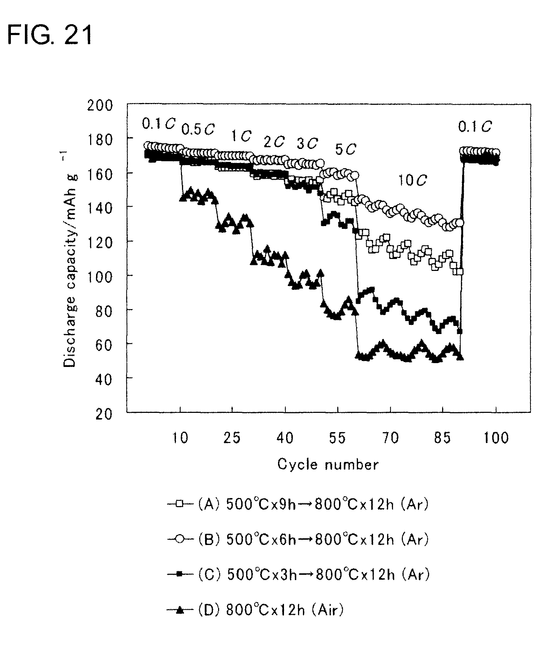

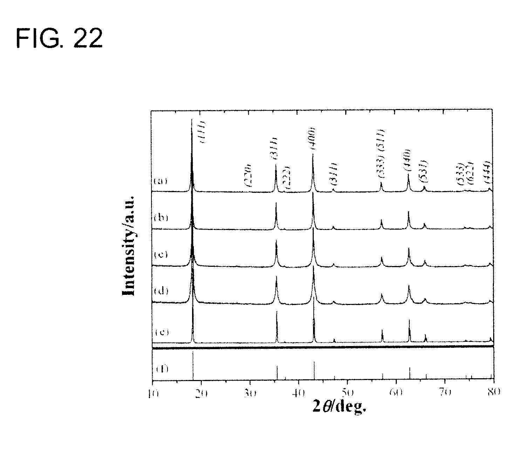

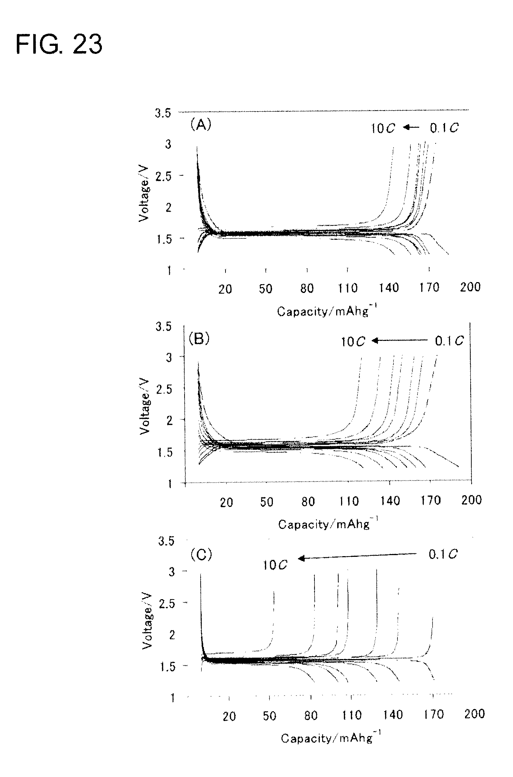

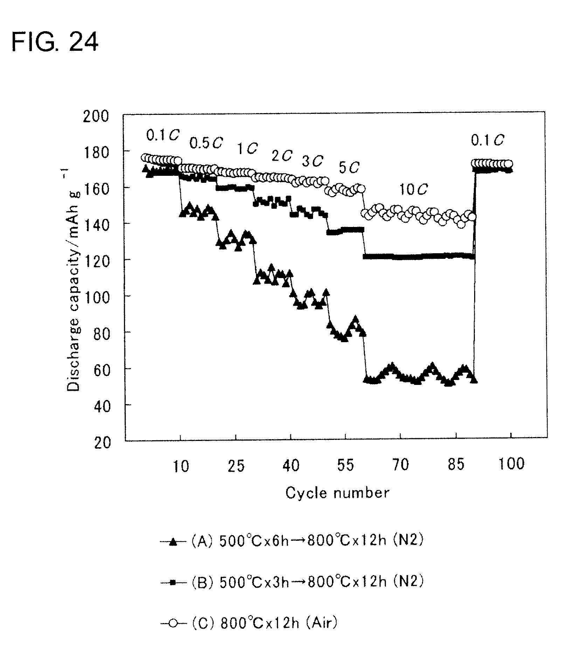

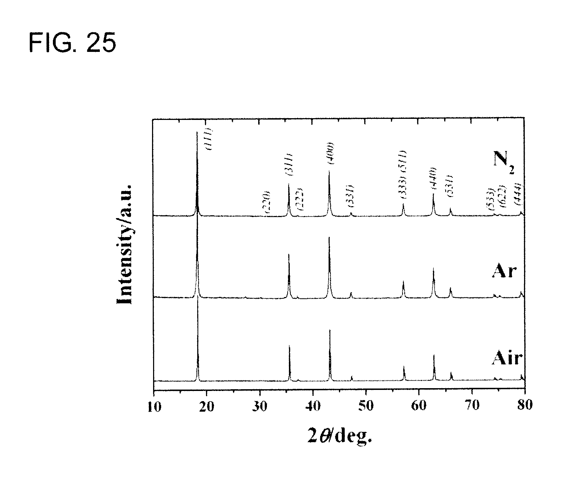

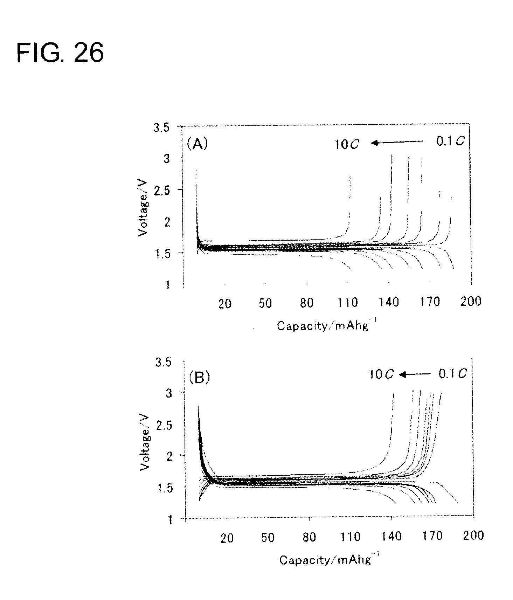

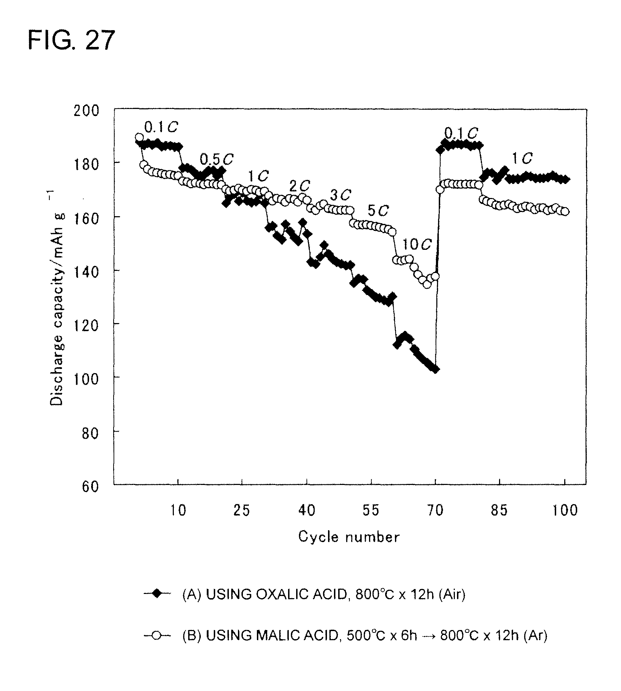

Fig.1 is a schematic cross sectional view of a lithium-ion secondary battery according to an embodiment of the present invention, Figs. 2 to 4 relate to Li₄₊ₓTi₅₋ₓO₁₂ according to an example 1-1 of the present invention, Fig.2 is an XRD pattern diagram, Fig.3 is a chart of initial charge/discharge curves, Fig.4 is a chart of a cycle characteristics, Figs. 5 to 8 relate to Li_{4.16}Ti_{4.84}O₁₂ according to an example 1-2 of the present invention, Fig.5 is an XRD pattern diagram, Fig.6 is a chart showing particle size distributions, Fig.7 is a chart of initial charge/discharge curves, Fig.8 is a chart of the cycle characteristics, Figs. 9 to 12 relate to Li_{4.16}Ti_{4.79}Nb_{0.05}O₁₂ according to an example 2-1 of the present invention, Fig.9 is an XRD pattern diagram, Fig.10 is a chart showing particle size distributions, Fig.11 is a chart of initial charge/discharge curves, Fig.12 is a chart of the cycle characteristics, Figs. 13 to 15 relate to Li_{4.16}Ti_{4.84-y}Nb_{y}O₁₂ according to an example 2-2 of the present invention, Fig.13 is an XRD pattern diagram, Fig.14 is a chart of initial charge/discharge curves, Fig.15 is a chart of the cycle characteristics, Figs. 16 to 18 relate to a non-stoichiometric titanium compound Li_{4.16}Ti_{4.84}O₁₂/C obtained by a composite-forming process with carbon heat treated in Ar/H₂ according to an example 3-1 of the present invention, Fig.16 is an XRD pattern diagram, Fig.17 is a chart of initial charge/discharge curves, Fig.18 is a chart of the cycle characteristics, Figs. 19 to 21 relate to a non-stoichiometric titanium compound Li_{4.16}Ti_{4.84}O₁₂/C obtained by a composite-forming process with carbon heat treated in Ar according to an embodiment 3-2 of the present invention, Fig.19 is an XRD pattern diagram, Fig.20 is a chart of initial charge/discharge curves, Fig.21 is a chart of the cycle characteristics, Figs. 22 to 24 relate to a non-stoichiometric titanium compound Li_{4.16}Ti_{4.84}O₁₂/C obtained by a composite-forming process with carbon heat treated in N₂ according to an example 3-3 of the present invention, Fig.22 is an XRD pattern diagram, Fig.23 is a chart of initial charge/discharge curves, Fig.24 is a chart of the cycle characteristics, Figs. 25 to 27 relate to a non-stoichiometric titanium compound Li_{4.16}Ti_{4.74}Nb_{0.10}O₁₂/C obtained by a composite-forming process with carbon heat treated in Ar according to an example 4-1 of the present invention, Fig.25 is an XRD pattern diagram, Fig.26 is a chart of initial charge/discharge curves, and Fig.27 is a chart of the cycle characteristics.

Fig. 1 is a schematic cross sectional view of a lithium-ion secondary battery 1 according to an embodiment of the present invention, and the battery is formed in a structure in which a current collector layer of positive electrode 14, an active material layer of positive electrode 17, a separator 15 retaining an electrolytic solution as an electrolyte layer, an active material layer of negative electrode 16, and a current collector layer of negative electrode 13 are sequentially laminated inside a positive electrode can 11 provided with a gasket 18, and are further covered by a negative electrode terminal 12. Peripheral portions of the positive electrode can 11 and the negative electrode terminal 12 are sealed by crimping them with the insulation gasket 18 therebetween.

In the example, the lithium-ion secondary battery 1 was prepared using a R2032 coin-type cell. The electrodes were prepared in the following way. The active material of negative electrode according to the present invention, a binder, and an auxiliary conducting agent were mixed at a weight ratio of 88:6:6 (Wt.%), and N-methyl-2-pyrrolidinone was added as a solvent, and they were kneaded into slurry. This was applied on an aluminum foil, which is a
current collector of negative electrode, and was pressed by a roll press at the room temperature. If a carbon composite of Li₄₊ₓTi_{5-x-y}Nb_{y}O₁₂ (where 0<x<0.30, 0<y<0.20) was used as the active material of negative electrode, the auxiliary conducting agent was not used, and instead the active material of negative electrode and the binder were mixed at a weight ratio of 90:10 (wt.%), punched into a disk of ϕ11.28 mm, and dried in a reduced pressure at 80°C for 12 hours or more.

Moreover, the lithium-ion secondary battery was prepared by using a lithium metal foil as the positive electrode collector, 1moldm⁻³LiPF₆/ethylene carbonate + dimethyl carbonate (mixing ratio: 30/70 vol.%) as the electrolytic solution, and Celgard (registered trademark) #2325 as the separator 15. The lithium-ion secondary battery was prepared in a glove box to which argon gas was filled.

In the embodiment, although a description is given of the R2032 coin-type cell as one embodiment of the lithium-ion secondary battery, applications of the active material of negative electrode for a lithium-ion secondary battery according to the present invention are not limited to this form of the battery. For example, the lithium-ion secondary battery may use a thin film solid electrolyte, an electrolyte in a solution form, an electrolyte in gel form, and a polymer electrolyte as the electrolyte.

As the active material of negative electrode, a single phase of the non-stoichiometric titanium compound represented by the chemical formula Li₄₊ₓTi₅₋ₓO₁₂ (where 0<x<0.30), and a single phase of the non-stoichiometric titanium compound represented by the chemical formula Li₄₊ₓTi_{5-x-y}Nb_{y}O₁₂ (where 0<x<0.30, 0<y<0.20) can be used, respectively.
Moreover, as the active material of negative electrode, the carbon composite obtained by applying a carbon composite-forming process to the non-stoichiometric titanium compound represented by the chemical formula Li₄₊ₓTi₅₋ₓO₁₂ (where 0<x<0.30) or to the non-stoichiometric titanium compound represented by the chemical formula Li₄₊ₓTi_{5-x-y}Nb_{y}O₁₂ (where 0<x<0.30, and 0<y<0.20) can be used.

Polyvinylene difluoride, polyvinylene fluoride, and polyacrylic acid (PAA) may be used as the binder. Polyvinylene difluoride is particularly preferred among them, and also in the present embodiment, polyvinylene difluoride was employed.
Graphite and the like in addition to acetylene black may be used as the auxiliary conducting agent. Acetylene black is particularly preferred among them, and also in the present embodiment, acetylene black was employed.
N-methyl-2-pyrrolidinone, N-ethyl-2-pyrrolidinone, N-buthyl-2-pyrrolidinone, water, and the like may be used as the solvent. N-methyl-2-pyrrolidinone is particularly preferred among them, and also in the present embodiment, N-methyl-2-pyrrolidinone was employed.
A metal foil such as copper, nickel, and stainless steel foils in addition to an aluminum foil, a conductive polymer film such as polyaniline and polypyrrole, and a metal foil and a carbon sheet on which the conductive polymer film is adhered or a metal foil and a carbon sheet which is covered with the conductive polymer film may be used as the current collectors of negative electrode and positive electrode.

Spinel type lithium manganese oxide (LiMn₂O₄), spinel type lithium manganese nickel oxide (LiMn_{1.5}Ni_{0.5}O₄), lithium cobalt oxide (LiCoO₂), lithium nickel oxide (LiNiO₂), lithium nickel cobalt manganese oxide (LiNi_{1/3}Mn_{1/3}Co_{1/3}O₂), and lithium iron phosphate (LiFePO₄) may be used as the positive electrode active material, and they may be used solely or in combination.
Methyl ethyl carbonate, propylene carbonate, dimethoxyethane, and the like in addition to ethylene carbonate and dimethyl carbonate may be used as the solvent for the electrolytic solution, and LiBF₄ and the like in addition to LiPF₆ may be used as the electrolyte. In the present embodiment, although the case where the electrolytic solution is used is described, other electrolytes may be used. Inorganic solid electrolytes, such as ion conductive ceramic, ion conductive glass, ionic crystal, may be used as these other electrolytes.

The non-stoichiometric titanium compound represented by the chemical formula Li₄₊ₓTi₅₋ₓO₁₂ (where 0<x<0.30) can be synthesized through a solution step of dissolving by adding oxalic acid, lithium salt, and titanium alkoxide in the existence of water and agitating them at approximately 80°C for approximately 3 hours, a precursor formation step of obtaining a precursor by spraying and drying the solution obtained in the solution step by means of a spray drier, and a calcining step of heat treating the precursor obtained in the precursor formation step in a furnace at 700 to 900°C for 6-48 hours.

The non-stoichiometric titanium compound represented by a chemical formula Li₄₊ₓTi_{5-x-y}Nb_{y}O₁₂ (where 0<x<0.30, 0<y<0.20) can be synthesized through a solution step of dissolving by adding oxalic acid, lithium salt, titanium alkoxide, and niobium alkoxide in the existence of water and agitating them at approximately 80°C for approximately 3 hours, a precursor formation step of obtaining a precursor by spraying and drying the solution obtained in the solution step by means of a spray drier, and a calcining step of heat treating the precursor obtained in the precursor formation step in a furnace at 600 to 900°C for 6-48 hours.

The carbon composite of the non-stoichiometric titanium compound represented by the chemical formula Li₄₊ₓTi₅₋ₓO₁₂ (where 0<x<0.30) can be synthesized through a solution step of dissolving by adding dicarboxylic acid the carbon number of which is at least four, lithium salt, and titanium alkoxide in the existence of water, and agitating them at approximately 80°C for approximately 3 hours, and then at the room temperature for approximately 12 hours; a precursor formation step of obtaining a precursor by spraying and drying the solution obtained in the solution step by means of a spray drier; and a calcining step of either one of a calcining step of heat treating the precursor obtained in the precursor formation step in a reducing atmosphere or a calcining step of heat treating the precursor in an inert atmosphere in a furnace at 800 to 900°C for 6-48 hours. On this occasion, the reducing atmosphere implies a mixture gas of Ar/H₂, and the inert atmosphere implies processing in a space substituted with N₂ or Ar.

The carbon composite of the non-stoichiometric titanium compound represented by the chemical formula Li₄₊ₓTi_{5-x-y}Nb_{y}O₁₂ (where 0<x<0.30, 0<y<0.20) can be synthesized through a solution step of dissolving by adding dicarboxylic acid the carbon number of which is at least four, lithium salt, titanium alkoxide, and niobium alkoxide in the existence of water and agitating them at approximately 80°C for approximately 3 hours, and then at the room temperature for approximately 12 hours; a precursor formation step of obtaining a precursor by spraying and drying the solution obtained in the solution step by means of a spray drier; and a calcining step of either one of a calcining step of heat treating the precursor obtained in the precursor formation step in a reducing atmosphere or a calcining step of heat treating the precursor in an inert atmosphere in a furnace at 800 to 900°C for 6-48 hours. On this occasion, the reducing atmosphere implies a mixture gas of Ar/H₂, and the inert atmosphere implies processing in a space substituted with N₂ or Ar.

Water-soluble carboxylic acids such as succinic acid, tartaric acid, glutaric acid and malic acid, may be used as the dicarboxylic acid the carbon number of which is at least four. Malic acid having higher water solubility is preferably used. Moreover, citric acid and the like that the carboxyl group is substituted to dicarboxylic acid may be used.
Lithium carbonate, lithium hydroxide, and the like may be used as the lithium salt, and lithium carbonate is preferably used among them.
Titanium tetra methoxide, titanium tetra ethoxide, titanium tetra isopropoxide, titanium dioxide, and the like may be used as titanium alkoxide, and titanium tetra isopropoxide is preferably used among them.
Niobium penta methoxide, niobium penta ethoxide, niobium penta isopropoxide, niobium penta-n-propoxide, niobium penta butoxide, diniobium pentoxide, and the like may be used as niobium alkoxide, and niobium penta ethoxide is preferably used among them.

### (Example 1)

A description will now be given of an example of the synthesis of the non-stoichiometric titanium compound Li₄₊ₓTi₅₋ₓO₁₂ (where 0<x<0.30) and a lithium-ion secondary battery using it as an active material of negative electrode.

The non-stoichiometric titanium compound Li₄₊ₓTi₅₋ₓO₁₂ (where 0<x<0.30) was synthesized as described below. Oxalic acid (0.2 mol) was dissolved in distilled water (400 ml), and an ethanol solution (20 ml) of lithium carbonate and titanium tetraisopropoxide (0.1 mol) were then added and dissolved by agitating at 80°C for 3 hours. On this occasion, lithium carbonate was added in a manner that Li/Ti ratio of lithium carbonate to titanium tetraisopropoxideis equivalent to the ratio of the above chemical formula. The obtained Li/Ti solution was then sprayed and dried by means of a spray drier, and a precursor was obtained. On this occasion, the spray dry conditions include inlet temperature: 160°C, outlet temperature: 100°C, injection pressure: 100kPa, flow rate of heated air: 0.70 m³ min⁻¹, and flow rate of the solution: 400 mlh⁻¹. Then, the non-stoichiometric titanium compound Li₄₊ₓTi₅₋ₓO₁₂ (where 0<x<0.30) was obtained by calcining the obtained precursor at 600-900°C for 12 hours in a muffle furnace.

### (Example 1-1)

Specimens were synthesized in a manner that the following ratio was provided from the non-stoichiometric titanium compound Li₄₊ₓTi₅₋ₓO₁₂ calcined in the air at the temperature of 800°C for 12 hours, and the XRD thereof were measured. Fig.2 shows XRD patterns thereof. The XRD measurements were also conducted under similar conditions in subsequent second to fourth examples.

### [XRD Measurement Conditions]

X-ray diffraction apparatus: Rigaku Denki, RINT2200, AFC7, Radiation source: CuKα radiation (λ=1.541Å), Applied voltage: 40 kV, Applied current: 30 mA,
Incident angle to specimen surface: DS=1°, Angle formed by diffraction line with respect to specimen surface: RS=1°, Incident slit width: SS=0.15 mm, Scan range: 2θ=10°-80°, Scan speed: 4°/min
The reflection method was carried out with continuous scan under the conditions described above.

### [Synthesized Specimen] Li₄₊ₓTi₅₋ₓO₁₂

(a)x=0.00, Li/Ti=0.80, (b)x=0.06, Li/Ti=0.82, (c)x=0.11, Li/Ti=0.84, (d)x=0.16, Li/Ti=0.86, (e)x=0.21, Li/Ti=0.88, (f)x=0.26, Li/Ti=0.90

Table 1 shows lattice constants and estimated impurity phases of the Li₄₊ₓTi₅₋ₓO₁₂ specimens calculated from the XRD patterns.

**[Table 1]**

| Molar ratio in nominal composition | Lattice constant (Å) | Impurity phase |
|---|---|---|
| Li/Ti=0.80(x=0.00) | 8.359 | r-TiO₂ |
| Li/Ti=0.82(x=0.05) | 8.359 | r-TiO₂ |
| Li/Ti=0.84(x=0.11) | 8.358 | r-TiO₂ |
| Li/Ti=0.86(x=0.16) | 8.360 | - |
| Li/Ti=0.88(x=0.21) | 8.358 | Li₂TiO₃ |
| Li/Ti=0.90(x=0.26) | 8.359 | Li₂TiO₃ |
| JCPDS (#26-1198) | 8.357 | |

As a result, no differences in lattice constant of the Li₄₊ₓTi₅₋ₓO₁₂ phase were observed in any products, and the products had values close to the peak position and the peak intensity of the X-ray diffraction of a lithium titanium oxide having the spinel type crystal structure (JCPDS No.26-1198).

Fig.3 shows initial charge/discharge curves of the non-stoichiometric titanium compound Li₄₊ₓTi₅₋ₓO₁₂ (x=0.00-0.26, Li/Ti=0.80-0.90) at each current density. Measurement conditions include a voltage range: 1.2-3.0V, a current density: 0.1C, 0.5C, 1C, 2C, and 3C (1C=175 mA g⁻¹), and a measurement temperature: 25°C. Any of the specimens presents a flat voltage curve around 1.55V.

Fig.4 shows the cycle characteristics of the non-stoichiometric titanium compound Li₄₊ₓTi₅₋ₓO₁₂ (x=0.00-0.26, Li/Ti=0.80-0.90) at each current density. Measurement conditions include the voltage range: 1.2-3.0V, the current density: 0.1C, 0.5C, 1C, 2C, and 3C (1C=175 mA g⁻¹), and the measurement temperature: 25°C. As a result, it was confirmed that the non-stoichiometric titanium compound of Li/Ti=0.86 for which the single phase was obtained has an excellent electrochemical characteristics compared to the compounds of x=0.00-0.11 (Li/Ti=0.80-0.84) containing r-TiO₂ as the impurity phase and compounds of x=0.21-0.26(Li/Ti=0.88-0.90) containing Li₂TiO₃.

r-TiO₂ and Li₂TiO₃ are poor in the electrochemical activity accompanying the lithium intercalation reaction, and if they are contained as impurities, the active material per weight thus decreases. The result implies that it is confirmed that the single phase Li_{4.16}Ti_{4.84}O₁₂ obtained for x=0.16 (Li/Ti=0.86) presents the best electrochemical characteristics.

### (Example 1-2)

An influence of the calcination temperature imposed on the specimens was studied for the fixed condition of x=0.16 (Li/Ti=0.86). XRDs of the non-stoichiometric titanium compound Li_{4.16}Ti_{4.84}O₁₂ (x=0.16, Li/Ti=0.86) obtained by calcining at 600, 700, 800, and 900°C in the air for 12 hours were measured. Fig.5 shows XRD patterns thereof. Moreover, Table 2 shows lattice constants calculated from the XRD patterns of the specimens calcined at each of the temperatures, observed impurity phases, and specific surface areas measured through the BET method.

**[Table 2]**

| Calciningtemperature (°C) | Lattice constant (Å) | Impurity phase | Specific surface area (m²g⁻¹) |
|---|---|---|---|
| 600 | 8.287 | r-TiO₂, Li₂TiO₃ | - |
| 700 | 8.36 | - | 2.92 |
| 800 | 8.36 | - | 1.61 |
| 900 | 8.361 | - | 0.91 |

The specimen obtained by calcining at 600°C presented diffraction peaks caused by r-TiO₂ and Li₂TiO₃ that are impurities, and it was found that this calcining temperature did not provide an intended specimen. The specimens obtained by calcining at 700°C, 800°C, and 900°C did not present diffraction peaks caused by the impurities at all, the obtained XRD patterns could be attributed to the cubic crystal system with the space group Fd-3m, and it was found that the single phases were synthesized. Based on the above results, it was confirmed that the calcining temperature for obtaining the intended specimen in a single phase was equal to or more than 700°C.
Moreover, although a difference in the lattice constant was not observed in any of the specimens, the specific surface area decreased with increase in the calcining temperature.

Moreover, Fig.6 shows particle size distributions of the non-stoichiometric titanium compound Li_{4.16}Ti_{4.84}O₁₂ (x=0.16, Li/Ti=0.86) obtained by calicining at 700, 800, and 900°C in the air for 12 hours. According to the results of the particle size distribution measurements shown in Fig. 6, it was observed that the average particle size increased with increase in the calcining temperature. It is estimated that the increase in the average particle size and the decrease in the specific surface area were caused by sintering of particles resulting from the increase in the calcining temperature.

Table 3 shows a result of a composition analysis obtained by means of an ICP-MS for the non-stoichiometric titanium compound Li_{4.16}Ti_{4.84}O₁₂ (x=0.16, Li/Ti=0.86) obtained by calcining at 700, 800, and 900°C in air for 12 hours.

**[Table 3]**

| Calcinating temperature (°C) | Molar ratio in nominal composition (Li/Ti) | Measured value (Li/Ti) |
|---|---|---|
| 700 | 0.860 | 0.832(9) |
| 800 | | 0.826(3) |
| 900 | | 0.829(4) |

This result shows that the molar ratio of lithium to titanium was higher than the stoichiometric ratio of Li₄Ti₅O₁₂ (Li/Ti=0.80) for any of the specimens, and it was appreciated that excessive amount of lithium was present.

A neutron diffraction measurement was carried out in order to investigate at which sites (positions) in the crystal structure the excessive amount of lithium was present and the like, and crystal structure analysis was carried out. The crystal structure analysis was carried out through the Rietveld analysis on neutron diffraction patterns. From the neutron diffraction patterns, it was observed that the excessive amount of lithium component was not present as Li₂O, Li₂TiO₃, or Li₂Ti₃O₇. Table 4 shows spinel-type structural formulas Li₍₈ₐ₎[Li_{1/3+x}Ti_{5/3-x}]_{(16d)}O_{4-z(32e)} of the non-stoichiometric titanium compound Li_{4.16}Ti_{4.84}O₁₂ calcined at 700, 800, and 900°C in the air for 12 hours estimated from the results of the Rietveld analysis and the results of the ICP-MS.

**[Table 4]**

| Calcining temperature (°C) | Chemical composition |
|---|---|
| 700 | Li_{1.00(8a)} [Li_{0.33}Li_{0.029(9)}Ti_{1.636(7)}]_{16d}O_{3.95(3) (32e)} |
| 800 | Li₁.₀₀₍₈ₐ₎ [Li_{0.33}Li_{0.024(0)}Ti_{1.642(6)}]_{16d}O_{3.96(2) (32e)} |
| 900 | Li_{1.00(8a)}[Li_{0.33}Li_{0.026(8)}Ti_{1.639(8)}]_{16d}O_{3.95(6) (32e)} |

The result showed that, in any of the specimens, at the 16d site, approximately the same amount of excessive lithium was present and oxygen was lacking.

Fig.7 shows initial charge/discharge curves of the non-stoichiometric titanium compound Li_{4.16}Ti_{4.84}O₁₂ (x=0.16, Li/Ti=0.86) calcined at 600, 700, 800, and 900°C in the air for 12 hours, for a current density 0.1C (1C=175 mA g⁻¹), the voltage range 1.2-3.0V, and the measurement temperature 25°C. The initial discharge capacity of Li_{4.16}Ti_{4.84}O₁₂ calcined at 600°C was 30.8 mAh g⁻¹, and presented little charge/discharge capacity. The initial charge/discharge capacities of Li_{4.16}Ti_{4.84}O₁₂ calcined at 700, 800, and 900°C were 177.2, 166.2, and 159.3 mA h g⁻¹, respectively.

Fig.8 shows the cycle characteristics of the non-stoichiometric titanium compound Li_{4.16}Ti_{4.84}O₁₂ (x=0.16, Li/Ti=0.86) calcined at 600, 700, 800, and 900°C in the air for 12 hours, for the current density 0.1C (1C=175 mA g⁻¹), the voltage range 1.2-3.0V, and the measurement temperature 25°C. Li_{4.16}Ti_{4.84}O₁₂ calcined at 600°C presented little discharge capacity. As the calcining temperature increased from 700°C to 900°C, it was shown that the charge/discharge capacity decreased. It is estimated that this decrease in the charge/discharge capacity was caused by a change of particle shape, an increase of average particle diameter, and a decrease of surface area. In summary, it was shown that the single phase was obtained when the molar ratio in the nominal composition of the lithium to titanium was 0.860 and the calcining was carried out at 700°C, which presented the best charge/discharge characteristic.

### (Example 2)

A description will now be given of an example of the synthesis of the non-stoichiometric titanium compound Li₄₊ₓTi_{5-x-y}Nb_{y}O₁₂ (where 0<x<0.30, 0<y<0.20) and a lithium-ion secondary battery using this as an active material of negative electrode.

The non-stoichiometric titanium compound represented by the chemical formula Li₄₊ₓTi_{5-x-y}Nb_{y}O₁₂ (where 0<x<0.30, 0<y<0.20) was synthesized as described below. Oxalic acid (0.2 mol) was dissolved in distilled water (400 ml) , then an ethanol solution (20 ml) of lithium carbonate, titanium tetraisopropoxide (0.1 mol), and niobium pentaethoxide were added thereto, and they were dissolved by agitation at 80°C for 3 hours. On this occasion, lithium carbonate was added so that Li/(Ti+Nb) ratio of lithium carbonate to titanium tetraisopropoxide and niobium pentaethoxide was 0.860. Then, the obtained Li/(Ti+Nb) solution was sprayed and dried by means of a spray drier, and a precursor was obtained. On this occasion, the spray dry conditions include inlet temperature: 160°C, outlet temperature: 100°C, injection pressure: 100kPa, flow rate of heated air: 0.70 m³ min⁻¹, and flow rate of the solution: 400 mlh⁻¹. Then, a non-stoichiometric titanium compound Li_{4.16}Ti_{4.84-y}Nb_{y}O₁₂ (where 0<y<0.20) was obtained by calcining the obtained precursor at 700-900°C for 12 hours in a muffle furnace.

### (Example 2-1)

An influence of the calcining temperature imposed on the specimens was studied for a fixed niobium substitution quantity of 0.05. XRDs of the non-stoichiometric titanium compound Li_{4.16}Ti_{4.79}Nb_{0.05}O₁₂ calcined at 600, 700, 800, and 900°C in the air for 12 hours were measured. Fig.9 shows XRD patterns thereof. Although diffraction peaks caused by the non-stoichiometric titanium compound and impurities of unknown phase in a small quantity were observed for the calcination at 600°C, as for the calcination at 700, 800, and 900°C, such diffraction peaks was not observed. It was thus found that a single phase Li-Ti-Nb-O without impurities was obtained. Moreover, compared to a niobium-unsubstituted non-stoichiometric titanium compound, the niobium-substituted non-stoichiometric titanium compound has an extremely low impurity phase even at 600°C, and a Li-Ti-Nb-O compound close to a single phase could be synthesized. At a calcining temperature equal to or more than 700°C, it was shown that a single phase could stably be synthesized.

Table 5 shows lattice constants obtained by attributing the XRD patterns to the cubic crystal system with the space group Fd-3m and specific surface areas measured by the BET method.

**[Table 5]**

| Calcining temperature (°C) | Lattice constant (Å) | Specific surface area (m²g⁻¹) |
|---|---|---|
| 600 | 8.363 | - |
| 700 | 8.366 | 2.43 |
| 800 | 8.365 | 1.59 |
| 900 | 8.362 | 0.68 |

As a result, although there was no difference among values of the lattice constant due to the calcining temperature, it was shown that the specific surface area decreased with increase of the calcining temperature.

Table 6 shows a result of the chemical composition analysis obtained by means of an ICP-MS for the non-stoichiometric titanium compound Li_{4.16}Ti_{4.79}Nb_{0.05}O₁₂ calcined at 700, 800, and 900°C in the air for 12 hours.

**Table 6**

| Calcining temperature (°C) | Nominal composition ratio Li/(Ti+Nb) | Measured value Li/(Ti+Nb) | Nominal composition ratio Ti/Nb | Measured value Ti/Nb |
|---|---|---|---|---|
| 700 | 0.860 | 0.840(9) | 95.8 | 97.4(3) |
| 800 | | 0.847(6) | | 96.6(4) |
| 900 | | 0.841(5) | | 96.1(5) |

As a result, it was shown that the measured values of niobium were approximately equal to the ratio in the nominal composition. Moreover, the measured molar ratio of the lithium to titanium Li/Ti=0.841-0.847 was a higher value than the molar ratio of the stoichiometric composition of 0.800, and it was shown that excessive amount of lithium was present.

A crystal structure analysis was carried out through the neutron diffraction measurement, for studying at which sites (positions) in the crystal structure the excessive amount of lithium and niobium were present and the like. The Rietveld analysis was applied to the obtained neutron diffraction patterns. Table 7 shows spinel-type structural formulas Li₍₈ₐ₎[Li_{1/3+x}Ti_{5/3-x-y}Nb_{y}]_{(16d)}O₄₍₃₂ₑ₎ of the non-stoichiometric titanium compound Li_{4.16}Ti_{4.79}Nb_{0.05}O₁₂ calcined at 700, 800, and 900°C in the air for 12 hours, obtained from the results of the Rietveld analysis and the results of the ICP-MS.

**[Table 7]**

| Calcining temperature (°C) | Chemical composition |
|---|---|
| 700 | Li_{1.00(8a)} [Li_{0.33}Li_{0.037(1)}Ti_{1.629(5)}Nb_{0.016(5)}]_{16d}O_{3.98(4) (32e)} |
| 800 | Li_{1.00(8a)} [Li_{0.33}Li_{0.042(9)}Ti_{1.623(7)}Nb_{0.016(8)}]_{16d}O_{3.97(6) (32e)} |
| 900 | Li_{1.00(8a)} [Li_{0.33}Li_{0.037(6)}Ti_{1.629(0)}Nb_{0.016(8)}]_{16d}O_{3.98(4) (32e)} |

The result showed that, in any of the specimens, at the 16d site, approximately the same amount of lithium in a range of x=0.037-0.043 was excessively present and oxygen was lacking.

Moreover, Fig.10 shows particle size distributions of the non-stoichiometric titanium compound Li_{4.16}Ti_{4.79}Nb_{0.05}O₁₂ calcined at 700, 800, and 900°C in the air for 12 hours. According to the results of particle size distribution measurements shown in Fig.10, it was observed that the average particle diameter increased with increase of the calcining temperature. It is estimated that increase of the average particle size and decrease of specific surface area described above were caused by sintering of particles resulting from increase in the calcining temperature.

Fig.11 shows initial charge/discharge curves of the non-stoichiometric titanium compound Li_{4.16}Ti_{4.79}Nb_{0.5}O₁₂ calcined at 600, 700, 800, and 900°C in the air for 12 hours, for current densities 0.1C, 0.5C, 1C, 2C, and 3C (1C=175 mA g⁻¹), the voltage range 1.2-3.0V, and the measurement temperature 25°C, and Fig.12 shows the cycle characteristics in the same conditions. It was shown that any of non-stoichiometric titanium compounds present a flat voltage curve around 1.55V. The initial discharge capacity of Li_{4.16}Ti_{4.79}Nb_{0.05}O₁₂ calcined at 600°C in the air for 12 hours was 167.9 mAh g⁻¹ at the current density of 0.1C, which was a larger value compared to an initial discharge capacity of 30.8 mAh g⁻¹ at the current density of 0.1C of Li_{4.16}Ti_{4.84}O₁₂ calcined under the same conditions (refer to Fig.8). According to the results of the XRD, it is estimated that this was caused by formation of Li_{4.16}Ti_{4.79}Nb_{0.05}O₁₂ close to a single phase even at the low calcining temperature of 600°C. Moreover, the discharge capacity decreased with increase in the calcining temperature to 800-900°C.

### (Example 2-2)

According to the above result, the best charge/discharge characteristic was obtained in the case of the calcination at 700°C in the air for 12 hours, and therefore Li_{4.16}Ti_{4.84-y}Nb_{y}O₁₂ (0.00≤y≤0.30) was synthesized under the same conditions, for examining the influence of changes in the amount of the niobium substitution on the electrochemical characteristics of specimens.

XRDs of non-stoichiometric titanium compounds Li_{4.16}Ti_{4.84-y}Nb_{y}O₁₂ (0.00≤y≤0.30) obtained by calcining precursors obtained through the spray dry method were measured at 700 °C in the air for 12 hours. Fig.13 shows XRD patterns thereof.
Although diffraction peaks caused by impurities were not observed at all as long as the niobium substitution quantity (y) was up to 0.15, a diffraction peak caused by LiNbO₃ was observed when y=0.20 or more. It is revealed that a solid solution range of niobium is 0.00<y<0.20. Moreover, as for the specimen of y=0.30, the diffraction peak caused by LiNbO₃ and unknown peaks which cannot be attributed to anything specific were observed.

Table 8 shows a result of the composition analysis obtained by means of an ICP-MS as for the non-stoichiometric titanium compound Li_{4.16}Ti_{4.84-y}Nb_{y}O₁₂ (0.00≤y≤0.15) calcined at 700°C in the air for 12 hours.

**[Table 8]**

| Nb substitution quantity y | Nominal composition ratio Li/(Ti+Nb) | Measured value Li/(Ti+Nb) | Nominal composition ratio Ti/Nb | Measured value Ti/Nb |
|---|---|---|---|---|
| 0.00 | 0.860 | 0.832(9) | - | - |
| 0.01 | | 0.829(1) | 483 | 502.0(7) |
| 0.05 | | 0.847(6) | 95.8 | 97.4(4) |
| 0.10 | | 0.830(4) | 47.4 | 48.8(1) |
| 0.15 | | 0.834(0) | 31.3 | 33.1(3) |

As a result, it was shown that the measured values of niobium were approximately equal to the nominal composition ratio. Moreover, the molar ratio of lithium to transition metals Li/(Ti+Nb) was 0.829-0.848, which was higher value than the molar ratio of the stoichiometric composition of 0.800. It was thus shown that excessive amount of lithium is present.

Table 9 shows a non-stoichiometric titanium compound Li_{4.16}Ti_{4.84-y}Nb_{y}O₁₂ (0.00≤y≤0.15) calcined at 700°C in the air for 12 hours, estimated from the results of the Rietveld analysis and the results of the ICP-MS, in the form of spinel-type structural formulas Li₍₈ₐ₎ [Li_{1/3+x}Ti_{5/3-x-y}Nb_{y}] _{(16d})O_{4-z(32e)}.

**[Table 9]**

| Nb substitution quantity y | Chemical composition |
|---|---|
| 0.00 | Li_{1.00(8a)} [Li_{0.33}Li_{0.029(9)}Ti_{1.636(7)}] _{16d}O_{3.95(3)(32e)} |
| 0.01 | Li_{1.00(8a)} [Li_{0.33}Li_{0.026(5)}Ti_{1.636(8)}Nb_{0.003(3)}] _{16d}O_{3.96(0) (32e)} |
| 0.05 | Li_{1.00(8a)} [Li_{0.33}Li_{0.037(1)}Ti_{1.629}(₅)Nb_{0.016(5)}] _{16d}O_{3.98(4)(32e)} |
| 0.10 | Li_{1.00(8a)} [Li_{0.33}Li_{0.027(7)}Ti_{1.606(0)}Nb_{0.032(9)}] _{16d}O_{3.97(3)(32e)} |
| 0.15 | Li_{1.00(8a)} [Li_{0.33}Li_{0.30(9)}Ti_{1.587(8)}Nb_{0.047(9)}] _{16d}O_{3.97(6)(32e)} |

The result showed that, in any of the specimens, at the 16d site, an approximately the same amount of lithium in a range of x=0.030-0.037 was excessively present, further in a range of z=0.05-0.03, Nb⁵⁺ substituting Ti⁴⁺ in a range of y=0.003-0.049, and further oxygen was lacking in a range of z=0.05-0.03.

Fig.14 shows initial charge/discharge curves of the non-stoichiometric titanium compound Li_{4.16}Ti_{4.84-y}Nb_{y}O₁₂ (0.00≤y≤0.20) calcined at 700°C in the air for 12 hours, at current densities 0.1C, 0.5C, 1C, 2C, 3C, 5C, and 10C (1C=175 mA g⁻¹), the voltage range 1.2-3.0V, and the measurement temperature 25°C. Decrease in the charge/discharge capacity was observed for a specimen with a niobium substitution quantity of 0.20. According to the result of the XRD (refer to Fig.13), it was appreciated that, as for the specimen of which niobium substitution quantity was 0.20, LiNbO₃ was formed as an impurity, which does not present the charge/discharge reaction in the voltage range of 1.2-3.0V. According to the above result, the charge/discharge capacities larger than that in the case of y=0.00 were obtained in a range of y=0.01-0.15, namely 0.00<y<0.20.

Fig.15 shows the cycle characteristics of the non-stoichiometric titanium compound Li_{4.16}Ti_{4.84-y}Nb_{y}O₁₂ (0.00≤y≤0.20) calcined at 700°C in the air for 12 hours, in the case of current densities 0.1C, 0.5C, 1C, 2C, 3C, 5C, and 10C (1C=175 mA g⁻¹), the voltage range 1.2-3.0V, and the measurement temperature 25°C. Moreover, Table 10 shows average discharge capacities for each of the cycles. It was shown that an especially large discharge capacity was obtained in the case where the niobium substitution quantity was in a range of y=0.01-0.15, namely 0.00<y<0.20.

**[Table 10]**

| | 0.1C | 0.5C | 1C | 2C | 3C | 5C | 10C |
|---|---|---|---|---|---|---|---|
| | (1-10) | (11-20) | (21-30) | (31-40) | (41-50) | (51-60) | (61-70) |
| y=0.00 | 178.1(5) | 164.9(9) | 153.7(4) | 141.0(7) | 131.6(5) | 117.9(9) | 70.6(4) |
| y=0.01 | 182.1(3) | 171.3(5) | 165.5(8) | 149.8(0) | 139.6(9) | 123.2(8) | 90.2(2) |
| y=0.05 | 180.0(5) | 170.4(1) | 162.7(9) | 151.0(5) | 140.9(9) | 130.0(6) | 105.1(5) |
| y=0.10 | 186.4(9) | 176.5(9) | 166.5(2) | 154.2(8) | 143.8(5) | 131.8(7) | 109.5(7) |
| y=0.15 | 182.1(2) | 169.8(4) | 159.4(2) | 145.9(6) | 136.5(9) | 120.3(4) | 76.2(9) |
| y=0.20 | 176.6(9) | 161.7(1) | 150.4(1) | 134.5(4) | 124.7(6) | 109.9(6) | 83.0(1) |

| | | | | | | | |
|---|---|---|---|---|---|---|---|
| *unit: mAhg⁻¹ | | | | | | | |

### (Example 3)

A description will now be given of an example of the synthesis of a carbon composite of the non-stoichiometric titanium compound Li₄₊ₓTi₅₋ₓO₁₂ (where 0<x<0.30) and a lithium-ion secondary battery using it as an active material of negative electrode. The carbon composite is expressed as Li₄₊ₓTi₅₋ₓO₁₂/C hereinafter.

Li₄₊ₓTi₅₋ₓO₁₂/C (where 0<x<0.30) was synthesized as described below. Malic acid (0.2 mol) was dissolved in distilled water (400 ml), an ethanol solution (20 ml) of lithium carbonate and titanium tetraisopropoxide (0.1 mol) were added thereto and dissolved by agitation at 80°C for 3 hours and further agitation at the room temperature for approximately 12 hours. On this occasion, lithium carbonate was added so that Li/Ti ratio of lithium carbonate to titanium tetraisopropoxide falls in the range of the above chemical formula. Then, the obtained Li/Ti solution was sprayed and dried by means of a spray drier, in order to obtain a precursor. On this occasion, the spray dry conditions include inlet temperature: 160°C, outlet temperature: 100°C, injection pressure: 100kPa, flow rate of heated air: 0.70 m³ min⁻¹, and flow rate of the solution: 400 mlh⁻¹. Then, after the obtained precursor was preheated, Li₄₊ₓTi₅₋ₓO₁₂/C (where 0<x<0.30) was obtained by calcining the precursor at 800-900°C for 12 hours in a muffle furnace in a reducing atmosphere (Ar/H₂) or in an inert atmosphere (Ar or N₂).

### (Example 3-1)

A description will now be given of a result for the carbon composite of Li₄₊ₓTi₅₋ₓO₁₂/C (where 0<x<0.30) calcined in the reducing atmosphere of Ar/H₂.
The precursor obtained in the example 3 was preheated in the reducing atmosphere of Ar/H₂ (mixture ratio of Ar/H₂: 90/10) at 500°C for given periods, and XRDs of Li_{4.16}Ti_{4.84}O₁₂/C calcined in the same atmosphere at 800°C for 12 hours were measured. Fig.16 shows XRD patterns thereof. The preheating periods are (a) : 9 hours, (b) : 6 hours, (c) : 3 hours, and (d) 0 hour (without preheating), and (e) presented for comparison shows a pattern for the non-stoichiometric titanium compound Li_{4.16}Ti_{4.84}O₁₂ calcined at 800°C in the air for 12 hour. It should be noted that (f) represents peak positions and peak intensities of the X-ray diffraction of the lithium titanium oxide having the spinel type crystal structure (JCPDS No.26-1198). As a result, the XRD patterns of Li_{4.16}Ti₄.₈₄O₁₂/C could be attributed to the cubic crystal system with the space group Fd-3m, and it was shown that the single phase Li-Ti-O was obtained, and the carbon component was amorphous.

Moreover, Table 11 shows lattice constants based on the fact that the XRD patterns are attributed to the cubic crystal system with the space group Fd-3m.

**[Table 11]**

| Preheating in Ar/H₂ atmosphere | Lattice constant (Å) |
|---|---|
| 500 °C, 9 hours | 8.365 |
| 500 °C, 6 hours | 8.366 |
| 500 °C, 3 hours | 8.366 |
| Without preheating | 8.365 |

A large difference was not observed in any of the lattice constants.

Table 12 shows an elemental analysis on Li_{4.16}Ti_{4.84}O₁₂/C obtained by preheating in the reducing atmosphere of Ar/H₂ at 500°C for several hours and then calcining at 800°C for 12 hours in the same atmosphere.

**[Table 12]**

| Preheating in Ar/H₂ atmosphere | Carbon nominal quantity (wt. %) | Elemental analysis values | | |
|---|---|---|---|---|
| | | Carbon quantity (wt. %) | Hydrogen quantity (wt. %) | H/C |
| 500 °C, 9 hours | 50.1 | 13.94 | 0.39 | 0.028 |
| 500 °C, 6 hours | | 13.36 | 0.37 | 0.028 |
| 500 °C, 3 hours | | 12.84 | 0.40 | 0.031 |
| Without preheating | | 11.76 | 0.36 | 0.031 |

As a result, it was shown that 12-14% of carbon remained in any of the specimens. Moreover, a small quantity of hydrogen remained in addition to carbon. It is estimated that this hydrogen resulted from residual organic substances which was not completely decomposed during the calcining.

Fig.17 shows initial charge/discharge curves of Li_{4.16}Ti_{4.84}O₁₂/C obtained by preheating in the reducing atmosphere of Ar/H₂ at 500°C for given periods, and then calcining at 800°C for 12 hours in the same atmosphere, with current densities 0.1 to 10C (1C=175 mA g⁻¹), the voltage range 1.2-3.0V, and the measurement temperature 25°C. The preheating periods are (A): 9 hours, (B): 6 hours, and (C) 3 hours. Moreover, (D) presented for comparison in the drawing shows an initial charge/discharge curve for the non-stoichiometric titanium compound Li_{4.16}Ti_{4.84}O₁₂ calcined at 800°C in the air for 12 hours under the same conditions. It should be noted that the charge/discharge capacity of the specimen to which the composite-forming process with carbon was applied corresponds to a value of the capacity per the active material weight after the residual carbon was removed.

As a result, the specimen (C) preheated at 500°C for 3 hours presented the most excellent characteristics.

Fig.18 shows the cycle characteristics of Li_{4.16}Ti_{4.84}O₁₂/C obtained by preheating in the reducing atmosphere of Ar/H₂ at 500°C for the given periods and then calcining at 800°C for 12 hours in the same atmosphere, with current densities 0.1-10C (1C=175 mA g⁻¹), the voltage range 1.2-3.0V, and the measurement temperature 25°C. The preheating periods are (A) : 9 hours, (B) : 6 hours, and (C) 3 hours. Moreover, (D) presented for comparison in the drawing shows the cycle characteristics of the non-stoichiometric titanium compound Li_{4.16}Ti_{4.84}O₁₂ obtained by calcining at 800°C in the air for 12 hours under the same conditions. It should be noted that the charge/discharge capacity of the specimen to which the composite-forming process with carbon was applied corresponds to a value for the active material after the amount of residual carbon was removed.

This result showed that charge/discharge characteristics were greatly improved through the application of the carbon composite-forming process, and especially, the specimen (C), which was preheated at 500°C for 3 hours presented the discharge capacity of up to 145 mAh g⁻¹ at the large current density of 10C, which is the most excellent characteristics among them.

### (Example 3-2)

A description will now be given of a result of Li_{4.16}Ti_{4.84}O₁₂/C calcined in an inert atmosphere of argon (Ar).
The precursor obtained in the example 3 was preheated in the inert atmosphere of Ar at 500°C for given periods, and XRDs of Li_{4.16}Ti_{4.84}O₁₂/C calcined in the same atmosphere at 800°C for 12 hours were measured. Fig.19 shows XRD patterns thereof. The preheating periods are (a): 9 hours, (b) : 6 hours, (c): 3 hours, and (d) 0 hour (without preheating), and (e) presented for comparison shows a pattern for the non-stoichiometric titanium compound Li_{4.16}Ti_{4.84}O₁₂, which was calcined at 800°C in the air for 12 hours. It should be noted that (f) represents peak positions and peak intensities of the X-ray diffraction of the lithium titanium oxide having the spinel type crystal structure (JCPDS No.26-1198). As a result, although the XRD patterns of Li_{4.16}Ti_{4.84}O₁₂/C could be attributed to the cubic crystal system with the space group Fd-3m, a small diffraction peak due to r-TiO₂ was observed, showing that the impurity in small amount were contained.

Moreover, Table 13 shows lattice constants based on the fact that the XRD patterns are attributed to the cubic crystal system with the space group Fd-3m.

**[Table 13]**

| Preheating in Ar atmosphere | Lattice constant (Å) |
|---|---|
| 500 °C, 9 hours | 8.364 |
| 500 °C, 6 hours | 8.364 |
| 500 °C, 3 hours | 8.361 |
| Without Preheating | 8.361 |

A large difference was not observed in any of the lattice constants.

Table 14 shows an elemental analysis for Li_{4.16}Ti_{4.84}O₁₂/C which was preheated in the inert atmosphere of Ar at 500°C for several hours, and then was calcined at 800°C for 12 hours in the same atmosphere.

**[Table 14]**

| Preheating in Ar atmosphere | Carbon nominal quantity (wt. %) | Elemental analysis values | | |
|---|---|---|---|---|
| | | Carbon quantity (wt. %) | Hydrogen quantity (wt. %) | H/C ratio |
| 500 °C, 9 hours | 50.1 | 4.59 | 0.17 | 0.037 |
| 500 °C, 6 hours | | 6.95 | 0.21 | 0.030 |
| 500 °C, 3 hours | | 6.76 | 0.30 | 0.044 |
| Without preheating | | 10.26 | 0.38 | 0.037 |

This result shows that, although carbon remained in any of the specimens in the inert atmosphere of Ar, quantities of the remaining carbon were smaller than those in the reducing atmosphere of Ar/H₂. In addition to carbon, hydrogen remained. It is estimated that this hydrogen is derived from hydrogen of residual organic substances, which were left without being decomposed during the calcining.

Fig.20 shows initial charge/discharge curves of Li_{4.16}Ti_{4.84}O₁₂/C, which was preheated in the inert atmosphere of Ar at 500°C for given periods, and then was calcined at 800°C for 12 hours in the same atmosphere with current densities 0.1 to 10C (1C=175 mA g⁻¹), the voltage range 1.2-3.0V, and the measurement temperature 25°C. The preheating periods are (A): 9 hours, (B) : 6 hours, and (C) 3 hours. Moreover, (D) presented in the drawing for comparison shows the cycle characteristics of the non-stoichiometric titanium compound Li_{4.16}Ti_{4.84}O₁₂, which was calcined at 800°C in the air for 12 hours, under the same conditions. It should be noted that the charge/discharge capacity of the specimen to which the composite-forming process with carbon was applied corresponds to a value per the active material weight after the remaining carbon was removed.

As a result, the specimen (B) , which was preheated at 500°C for 6 hours, presented the most excellent characteristics.

Fig . 21 shows the cycle characteristics of Li_{4.16}Ti_{4.84}O₁₂/C, which was preheated in the inert atmosphere of Ar at 500°C for the several hours, and then was calcined at 800°C for 12 hours in the same atmosphere for current densities 0.1-10C (1C=175 mA g⁻¹), the voltage range 1.2-3.0V, and the measurement temperature 25°C. The preheating periods are (A) : 9 hours, (B) : 6 hours, and (C) 3 hours. Moreover, (D) for comparison presented in the drawing shows the cycle characteristics of the non-stoichiometric titanium compound Li_{4.16}Ti_{4.84}O₁₂, which was calcined at 800°C in the air for 12 hours under the same conditions. It should be noted that the charge/discharge capacity of the specimen to which the composite-forming process with carbon was applied corresponds to a value per the active material weight after the remaining carbon was removed.

This result shows that a large improvement was observed in the charge/discharge characteristic through the application of the composite-forming process with carbon as in the case of the reducing atmosphere of Ar/H₂. Especially, the specimen (B), which was preheated at 500°C for 6 hours, presented the most excellent characteristic, the discharge capacity up to 145 mAh g⁻¹ at the current density of 10C. Moreover, no influence from the impurity r-TiO₂ observed in the diagram of the XRD was observed.

### (Example 3-3)

A description will now be given of a result of Li_{4.16}Ti_{4.84}O₁₂/C calcined in an inert atmosphere of N₂.
The precursor obtained in the example 3 was preheated in the inert atmosphere of N₂ at 500°C for given periods, and XRDs of Li_{4.16}Ti_{4.84}O₁₂/C calcined in the same atmosphere at 800°C for 12 hours were measured. Fig.22 shows XRD patterns thereof. The preheating periods are (a): 9 hours, (b): 6 hours, (c): 3 hours, and (d) 0 hour (without preheating), and (e) for comparison shows a pattern for the non-stoichiometric titanium compound Li_{4.16}Ti_{4.84}O₁₂, which was calcined at 800°C in the air for 12 hours. It should be noted that (f) represents peak positions and peak intensities of the X-ray diffraction of the lithium titanium oxide having the spinel type crystal structure (JCPDS No.26-1198) . The XRD patterns of Li_{4.16}Ti_{4.84}O₁₂/C could be attributed to the cubic crystal system with the space group Fd-3m, but a peak caused by r-TiO₂ was also observed, showing that a small amount of the impurity was contained.

Moreover, Table 15 shows lattice constants based on the fact that the XRD patterns are attributed to the cubic crystal system with the space group Fd-3m.

**[Table 15]**

| Preheating in N₂ atmosphere | Lattice constant (Å) |
|---|---|
| 500 °C, 9 hours | 8.367 |
| 500 °C, 6 hours | 8.367 |
| 500 °C, 3 hours | 8.357 |
| Without preheating | 8.365 |

As a result, a large difference was not observed in any of the lattice constants.

Table 16 shows elemental analysis values for Li_{4.16}Ti_{4.84}O₁₂/C which was preheated in the inert atmosphere of N₂ at 500°C for the several hours, and then was calcined at 800°C for 12 hours in the same atmosphere.

**[Table 16]**

| Preheating in N₂ atmosphere | Carbon nominal quantity (wt. %) | Elemental analysis values | | |
|---|---|---|---|---|
| | | Carbon quantity (wt. %) | Hydrogen quantity (wt. %) | H/C ratio |
| 500 °C, 9 hours | 50.1 | 10.11 | 0.23 | 0.023 |
| 500 °C, 6 hours | | 11.32 | 0.28 | 0.025 |
| 500 °C, 3 hours | | 14.63 | 0.23 | 0.023 |
| Without preheating | | 13.28 | 0.35 | 0.026 |

As a result, it was shown that as much quantity of carbon as those in the reducing atmosphere of Ar/H₂ and the inert atmosphere of Ar remains in any of the specimens. In addition to carbon, hydrogen remained. It is estimated that this hydrogen was derived from the hydrogen of residual organic substances which were left without being decomposed during the calcining.

Fig.23 shows initial charge/discharge curves of Li_{4.16}Ti_{4.84}O₁₂/C, which was preheated in the inert atmosphere of N₂ at 500°C for given periods, and then was calcined at 800°C for 12 hours in the same atmosphere for current densities 0.1-10C (1C=175 mA g⁻¹), the voltage range 1.2-3.0V, and the measurement temperature 25°C. The preheating periods are (A) : 6 hours and (B): 3 hours. Moreover, (C) presented for comparison in the drawing shows an initial charge/discharge curve for the non-stoichiometric titanium compound Li_{4.16}Ti_{4.84}O₁₂, which was calcined at 800°C in the air for 12 hours under the same conditions. It should be noted that the charge/discharge capacity of the specimen to which the composite-forming process with carbon was applied corresponds to a value per the active material weight after the remaining carbon was removed.

As a result, the specimen (A) , which was preheated at 500°C for 6 hours, presented the most excellent characteristics.

Fig.24 shows the cycle characteristics of Li_{4.16}Ti_{4.84}O₁₂/C, which was preheated in the inert atmosphere of N₂ at 500°C for given periods, and then was calcined at 800°C for 12 hours in the same atmosphere for current densities 0.1-10C (1C=175 mA g⁻¹), the voltage range 1.2-3.0V, and the measurement temperature 25°C. The preheating periods are (A) : 6 hours and (B): 3 hours. Moreover, (C) presented for comparison in the drawing shows the cycle characteristics of the non-stoichiometric titanium compound Li_{4.16}Ti_{4.84}O₁₂, which was calcined at 800°C in the air for 12 hours, under the same conditions. It should be noted that the charge/discharge capacity of the specimen to which the composite-forming process with carbon was applied corresponds to a value per the active material weight after the remaining carbon was removed.

As a result, a large improvement was observed in the charge/discharge characteristic through the application of the composite-forming process with carbon, and especially the specimen (A), which was preheated at 500°C for 6 hours, presented the most excellent characteristics, the discharge capacity up to 145 mAh g⁻¹ with the current density of 10C. Moreover, no influence from the impurity r-TiO₂ observed in the diagrams of the XRD was observed.

Although there was the cases of the presence/absence of the impurity depending on the type of the calcining atmosphere, in specimens calcined in any of the atmospheres, it was observed that the charge/discharge characteristics of the carbon composites were largely improved compared to those without the carbon composite-forming process.

### (Example 4)

A description will now be given of an example of a synthesis of a carbon composite of Li₄₊ₓTi_{5-x-y}Nb_{y}O₁₂ (where 0<x<0.30, 0<y<0.20) and a lithium-ion secondary battery using this as an active material of negative electrode. The carbon composite is expressed as Li₄₊ₓTi_{5-x-y}Nb_{y}O₁₂/C hereinafter.

Li₄₊ₓTi_{5-x-y}Nb_{y}O₁₂/C (where 0<x<0.30, 0<y<0.20) was synthesized as described below. Malic acid (0.2 mol) was dissolved in distilled water (400 ml) , and an ethanol solution (20 ml) of lithium carbonate, titanium tetraisopropoxide (0.1 mol), and niobium pentaethoxide were then added, and were dissolved by agitation at 80°C for 3 hours and further agitation at the room temperature for approximately 12 hours. On this occasion, lithium carbonate was added so that Li/ (Ti+Nb) ratio of lithium carbonate to titanium tetraisopropoxide and niobium pentaethoxide falls in the range of the above chemical formula. Then, the obtained Li/(Ti+Nb) solution was sprayed and dried by means of a spray drier, and a precursor was obtained. On this occasion, the spray dry conditions include inlet temperature: 160°C, outlet temperature: 100°C, injection pressure: 100kPa, flow rate of heated air: 0.70 m³ min⁻¹, and flow rate of the solution: 400 mlh⁻¹. Then, after the obtained precursor was preheated, the carbon composite of the non-stoichiometric titanium compound Li₄₊ₓTi_{5-x-y}Nb_{y}O₁₂ (where 0<x<0.30, 0<y<0.20) was obtained by calcining the precursor at 800-900°C for 12 hours in a muffle furnace in a reducing atmosphere (Ar/H₂) or in an inert atmosphere (Ar or N₂).

### (Example 4-1)

A description will now be given of Li₄₊ₓTi_{5-x-y}Nb_{y}O₁₂/C (where 0<x<0.30, 0<y<0.20) synthesized in an inert atmosphere of Ar or N₂.
XRDs of Li_{4.16}Ti_{1.74}Nb_{0.10}O₁₂/C which was preheated in the inert atmosphere (Ar or N₂) at 500°C for 6 hours, and then was calcined at 800°C for 12 hours in the same atmosphere were measured. Fig.25 shows XRD patterns thereof. For comparison, an XRD pattern of Li_{4.16}Ti_{4.74}Nb_{0.10}O₁₂/C calcined in the air under the same conditions is also shown. The XRD patterns of Li_{4.16}Ti_{4.74}Nb_{0.12}O₁₂/C could be attributed to the cubic crystal system with the space group Fd-3m, and it was estimated that approximately single phases were obtained, but an extremely small peaks caused by r-TiO₂ were observed.

Table 17 shows lattice constants based on the fact that the XRD patterns are attributed to the cubic crystal system with the space group Fd-3m.

**[Table 17]**

| Preheating atmosphere | Lattice constant (Å) |
|---|---|
| In Ar atmosphere | 8.370 |
| In N₂ atmosphere | 8.367 |

Table 18 shows an elemental analysis for Li_{4.16}Ti_{4.74}Nb_{0.10}O₁₂/C which was preheated in the inert atmosphere of Ar or N₂, and then was calcined at 800°C for 12 hours in the same atmosphere.

**[Table 18]**

| Preheating atmosphere | Carbon nominal quantity (wt. %) | Elemental analysis values | | |
|---|---|---|---|---|
| | | Carbon quantity (wt. %) | Hydrogen quantity (wt. %) | H/C ratio |
| In Ar atmosphere | 50.1 | 10.11 | 0.23 | 0.023 |
| In N₂ atmosphere | | 11.32 | 0.28 | 0.025 |

It was shown that approximately 10 to 11% of carbon remained in the inert atmosphere of both Ar and N₂.

Fig.26(B) shows the initial charge/discharge curves of Li_{4.16}Ti_{4.74}Nb_{0.10}O₁₂/C, which was preheated in the inert atmosphere (in Ar) at 500°C for 6 hours, and then was calcined at 800°C for 12 hours in the same atmosphere with current densities 0.1-10C (1C=175 mA g⁻¹) , the voltage range 1.2-3.0V, and the measurement temperature 25°C. Moreover, (A) presented for comparison in the drawing shows a charge/discharge curve for the non-stoichiometric titanium compound Li_{4.16}Ti_{4.74}Nb_{0.10}O₁₂, in which oxalic acid was used as a dicarboxylic acid, and which was calcined at 800°C in the air for 12 hours under the same conditions. The charge/discharge capacity of the specimen to which the composite-forming process with carbon (specimen (B) using malic acid) was applied corresponds to a value per the active material weight after the remaining carbon was removed. Further, acetylene black as an auxiliary conductive material for manufacturing an electrode was not used. As for the specimen (specimen (A) using oxalic acid) without the composite-forming process with carbon, acetylene black was used as the auxiliary conductive material for manufacturing an electrode.

As a result, it was shown that the specimen (B) to which the carbon composite-forming process was applied in the inert atmosphere of Ar presents better characteristics compared to that of the specimen without the carbon composite-forming process.

Fig.27(B) shows the cycling characteristics of Li_{4.16}Ti_{4.74}Nb_{0.10}O₁₂/C, which was preheated in the inert atmosphere (in Ar) at 500°C for 6 hours, and then was calcined at 800°C for 12 hours in the same atmosphere with current densities 0.1-10C (1C=175 mA g⁻¹) , the voltage range 1.2-3.0V, and the measurement temperature 25°C. Moreover, (A) presented for comparison in the drawing shows a charge/discharge curve for the non-stoichiometric titanium compound Li_{4.16}Ti_{4.74}Nb_{0.10}O₁₂, in which oxalic acid was used as dicarboxylic acid, and which was calcined at 800°C in the air for 12 hours under the same conditions. The charge/discharge capacity of the specimen to which the composite-forming process with carbon (specimen (B) using malic acid) was applied corresponds to a value per the active material weight after the remaining carbon was removed. Acetylene black as an auxiliary conductive material for manufacturing an electrode was not used. As for the specimen (specimen (A) using oxalic acid) without the composite-forming process with carbon, acetylene black was used as the auxiliary conductive material for manufacturing an electrode.

As a result, although at the current density of 0.1C, decrease of the charge/discharge capacity was observed, with the current density of 10C, the charge/discharge characteristic was largely improved through applying the composite-forming process with carbon, as in the reducing atmosphere of Ar/H₂ and the inert atmosphere of Ar. Moreover, no influence from the impurity r-TiO₂ observed in the diagrams of the XRD was observed.

Although a small amount of impurity r-TiO₂ was formed in the inert calcining atmosphere, as for the specimens calcined in the inert atmospheres, the carbon composites presented a large improvement of charge/discharge characteristic at the large current density compared to the cases without the carbon composite-forming process.

The battery capacity and the power characteristic of the battery were successfully improved by applying the carbon composite-forming process by calcining the non-stoichiometric titanium compounds Li₄₊ₓTi₅₋ₓO₁₂ (where 0<x<0.30) and Li₄₊ₓTi_{5-x-y}Nb_{y}O₁₂ (where 0<x<0.30, 0<y<0.20) in the reducing atmosphere (Ar/H₂) or the inert atmosphere (Ar or N₂). An organic acid was used as a carbon source, and malic acid was used as an example thereof. It was then found that an excellent charge/discharge characteristic was provided in the case where these non-stoichiometric titanium compounds were used as electrode specimens.

Moreover, the non-stoichiometric titanium compounds, the carbon composites thereof, the manufacturing method of the compound, the active material of negative electrode for a lithium-ion secondary battery containing the compound, and the lithium-ion secondary batteries using the active material of negative electrode according to the present invention include the following.

- A carbon composite of a non-stoichiometric titanium compound, in which the carbon composite-forming process is applied to a non-stoichiometric titanium compound represented by a chemical formula Li₄₊ₓTi₅₋ₓO₁₂ (where 0<x<0.30) using malic acid as a carbon source.

- A carbon composite of a non-stoichiometric titanium compound, in which a carbon composite-forming process is applied to a non-stoichiometric titanium compound represented by a chemical formula Li₄₊ₓTi_{5-x-y}Nb_{y}O₁₂ (where 0<x<0.30, 0<y<0.20) using malic acid as a carbon source.
As a result, the carbonization process can easily be carried out, since malic acid, which has a high water solubility (59wt.%) and is inexpensive among dicarboxylic acids the carbon number of which is at least four, can be used in the carbonization process.

- A manufacturing method of a carbon composite of a non-stoichiometric titanium compound represented by a chemical formula Li₄₊ₓTi₅₋ₓO₁₂ (where 0<x<0.30), the method including a solution step of dissolving by adding and agitating malic acid, lithium salt, and titanium alkoxide in given quantities in the existence of water, a precursor formation step of obtaining a precursor by spraying and drying the solution obtained in the solution step by means of a spray drier, and a calcining step of heat treating the precursor obtained in the precursor formation step in a reducing atmosphere or in an inert atmosphere in a furnace at 800 to 900°C for a given period.

- A manufacturing method of a carbon composite of a non-stoichiometric titanium compound represented by a chemical formula Li₄₊ₓTi_{5-x-y}Nb_{y}O₁₂ (where 0<x<0.30, 0<y<0.20) , the method including a solution step of dissolving by adding and agitating malic acid, lithium salt, titanium alkoxide, and niobium alkoxide in given quantities in the existence of water, a precursor formation step of obtaining a precursor by spraying and drying the solution obtained in the solution step by means of a spray drier, and a calcining step of heat treating the precursor obtained in the precursor formation step in a reducing atmosphere or in an inert atmosphere in a furnace at 800 to 900°C for a given period.

- The manufacturing method of the non-stoichiometric titanium compound represented by the chemical formula Li₄₊ₓTi₅₋ₓO₁₂ (where 0<x<0.30), in which titanium tetraisopropoxide is used as the titanium alkoxide in the solution step.

- The manufacturing method of the carbon composite of the non-stoichiometric titanium compound represented by the chemical formula Li₄₊ₓTi₅₋ₓO₁₂ (where 0<x<0.30), in which titanium tetraisopropoxide is used as the titanium alkoxide in the solution step.

- The manufacturing method of the non-stoichiometric titanium compound represented by the chemical formula Li₄₊ₓTi_{5-x-y}Nb_{y}O₁₂ (where 0<x<0.30, 0<y<0.20), in which titanium tetraisopropoxide is used as titanium alkoxide, and niobium pentaethoxide is used as the niobium alkoxide in the solution step.

- The manufacturing method of the carbon composite of the non-stoichiometric titanium compound represented by the chemical formula Li₄₊ₓTi_{5-x-y}Nb_{y}O₁₂ (where 0<x<0.30, 0<y<0.20), in which titanium tetraisopropoxide is used as the titanium alkoxide, and niobium pentaethoxide is used as the niobium alkoxide in the solution step.

- An active material of negative electrode for a lithium-ion secondary battery, including a carbon composite of a non-stoichiometric titanium compound obtained by applying a carbon composite-forming process to a non-stoichiometric titanium compound represented by a chemical formula Li₄₊ₓTi₅₋ₓO₁₂ (where 0<x<0.30) using malic acid as a carbon source.

- An active material of negative electrode for a lithium-ion secondary battery, including a carbon composite of a non-stoichiometric titanium compound obtained by applying a carbon composite-forming process to a non-stoichiometric titanium compound represented by a chemical formula Li₄₊ₓTi_{5-x-y}Nb_{y}O₁₂ (where 0<x<0.30, 0<y<0.20) using malic acid as a carbon source.

- A lithium-ion secondary battery including a current collector layer of positive electrode, an active material layer of positive electrode, an electrolyte layer, an active material layer of negative electrode, and a current collector layer of negative electrode; the active material layer of negative electrode including an active material of negative electrode for a lithium-ion secondary battery containing a carbon composite of a non-stoichiometric titanium compound obtained by applying carbon composite-forming process to a non-stoichiometric titanium compound represented by a chemical formula Li₄₊ₓTi₅₋ₓO₁₂ (where 0<x<0.30) using malic acid as a carbon source.

- A lithium-ion secondary battery including a current collector layer of positive electrode, an active material layer of positive electrode, an electrolyte layer, an active material layer of negative electrode, and a current collector layer of negative electrode; the active material layer of negative electrode including an active material of negative electrode for a lithium-ion secondary battery containing a carbon composite of a non-stoichiometric titanium compound obtained by applying carbon composite-forming process to a non-stoichiometric titanium compound represented by a chemical formula Li₄₊ₓTi_{5-x-y}Nb_{y}O₁₂ (where 0<x<0.30, 0<y<0.20) using malic acid as a carbon source.

### Industrial Applicability

The non-stoichiometric titanium compounds according to the present invention are materials in a single phase and having a high crystallinity. These can be used as an active electrode material such as an active electrode material for a lithium-ion secondary battery, for example. A lithium-ion secondary battery employing these can be used in a utility form similar to a battery generally used as a power supply of general devices as well as in applications to mobile devices such as a cellular phone, a laptop, a digital camera, and a portable game machine and large devices such as a hybrid vehicle and an electric vehicle, for example.

## Claims

1. A non-stoichiometric titanium compound represented by a chemical formula Li₄₊ₓTi₅₋ₓO₁₂ (where 0<x<0.30).

2. A non-stoichiometric titanium compound represented by a chemical formula Li₄₊ₓTi_{5-x-y}Nb_{y}O₁₂ (where 0<x<0.30, 0<y<0.20).

3. A carbon composite of a non-stoichiometric titanium compound, wherein a carbon composite-forming process is applied to a non-stoichiometric titanium compound represented by a chemical formula Li₄₊ₓTi₅₋ₓO₁₂ (where 0<x<0.30) using, as a carbon source, dicarboxylic acid the carbon number of which is at least four.

4. A carbon composite of a non-stoichiometric titanium compound, wherein a carbon composite-forming process is applied to a non-stoichiometric titanium compound represented by a chemical formula Li₄₊ₓTi_{5-x-y}Nb_{y}O₁₂ (where 0<x<0.30, 0<y<0.20) using, as a carbon source, dicarboxylic acid the carbon number of which is at least four.

5. A manufacturing method of a non-stoichiometric titanium compound represented by a chemical formula Li₄₋ₓTi₅₋ₓO₁₂ (where 0<x<0.30), comprising:
a solution step of dissolving by adding and agitating oxalic acid, lithium salt, and titanium alkoxide in given quantities in the existence of water;
a precursor formation step of obtaining a precursor by spraying and drying the solution obtained in the solution step by means of a spray drier; and
a calcining step of heat treating the precursor obtained in the precursor formation step in a furnace at 700 to 900°C for a given period.

6. A manufacturing method of a carbon composite of a non-stoichiometric titanium compound represented by a chemical formula Li₄₊ₓTi₅₋ₓO₁₂ (where 0<x<0.30), comprising:
a solution step of dissolving by adding and agitating dicarboxylic acid the carbon number of which is at least four, lithium salt, and titanium alkoxide in given quantities in the existence of water;
a precursor formation step of obtaining a precursor by spraying and drying the solution obtained in the solution step by means of a spray drier; and
a calcining step of heat treating the precursor obtained in the precursor formation step in a reducing atmosphere or in an inert atmosphere in a furnace at 800 to 900°C for a given period.

7. A manufacturing method of a non-stoichiometric titanium compound represented by a chemical formula Li₄₊ₓTi_{5-x-y}Nb_{y}O₁₂ (where 0<x<0.30, 0<y<0.20), comprising:
a solution step of dissolving by adding and agitating oxalic acid, lithium salt, titanium alkoxide, and niobium alkoxide in given quantities in the existence of water;
a precursor formation step of obtaining a precursor by spraying and drying the solution obtained in the solution step by means of a spray drier; and
a calcining step of heat treating the precursor obtained in the precursor formation step in a furnace at 600 to 900°C for a given period.

8. A manufacturing method of a carbon composite of a non-stoichiometric titanium compound represented by a chemical formula Li₄₊ₓTi_{5-x-y}Nb_{y}O₁₂ (where 0<x<0.30, 0<y<0.20), comprising:
a solution step of dissolving by adding and agitating dicarboxylic acid the carbon number of which is at least four, lithium salt, titanium alkoxide, and niobium alkoxide in given quantities in the existence of water;
a precursor formation step of obtaining a precursor by spraying and drying the solution obtained in the solution step by means of a spray drier; and
a calcining step of heat treating the precursor obtained in the precursor formation step in a reducing atmosphere or in an inert atmosphere in a furnace at 800 to 900°C for a given period.

9. An active material of negative electrode for a lithium-ion secondary battery comprising a non-stoichiometric titanium compound represented by a chemical formula Li₄₊ₓTi₅₋ₓO₁₂ (where 0<x<0.300.

10. An active material of negative electrode for a lithium-ion secondary battery comprising a non-stoichiometric titanium compound represented by a chemical formula Li₄₊ₓTi_{5-x-y}Nb_{y}O₁₂ (where 0<x<0.30, 0<y<0.20).

11. An active material of negative electrode for a lithium-ion secondary battery comprising a carbon composite of a non-stoichiometric titanium compound obtained by applying a carbon composite-forming process to a non-stoichiometric titanium compound represented by a chemical formula Li₄₊ₓTi₅₋ₓO₁₂ (where 0<x<0.30) using, as a carbon source, dicarboxylic acid the carbon number of which is at least four.

12. An active material of negative electrode for a lithium-ion secondary battery comprising a carbon composite of a non-stoichiometric titanium compound obtained by applying a carbon composite-forming process to a non-stoichiometric titanium compound represented by a chemical formula Li₄₊ₓTi_{5-x-y}Nb_{y}O₁₂ (where 0<x<0.30, 0<y<0.20) using, as a carbon source, dicarboxylic acid the carbon number of which is at least four.

13. A lithium-ion secondary battery comprising a current collector layer of positive electrode, an active material layer of positive electrode, an electrolyte layer, an active material layer of negative electrode, and a current collector layer of negative electrode,
the active material layer of negative electrode comprising an active material of negative electrode for a lithium-ion secondary battery containing a non-stoichiometric titanium compound represented by a chemical formula Li₄₊ₓTi₅₋ₓO₁₂ (where 0<x<0.30).

14. A lithium-ion secondary battery comprising a current collector layer of positive electrode, an active material layer of positive electrode, an electrolyte layer, an active material layer of negative electrode, and a current collector layer of negative electrode,
the active material layer of negative electrode comprising an active material of negative electrode for a lithium-ion secondary battery containing a non-stoichiometric titanium compound represented by a chemical formula Li₄₊ₓTi_{5-x-y}Nb_{y}O₁₂ (where 0<x<0.30, 0<y<0.20).

15. A lithium-ion secondary battery comprising a current collector layer of positive electrode, an active material layer of positive electrode, an electrolyte layer, an active material layer of negative electrode, and a current collector layer of negative electrode,
the active material layer of negative electrode comprising an active material of negative electrode for a lithium-ion secondary battery containing a carbon composite of a non-stoichiometric titanium compound obtained by applying carbon composite-forming process to a non-stoichiometric titanium compound represented by a chemical formula Li₄₊ₓTi₅₋ₓO₁₂ (where 0<x<0.30) using, as a carbon source, dicarboxylic acid the carbon number of which is at least four.

16. A lithium-ion secondary battery comprising a current collector layer of positive electrode, an active material layer of positive electrode, an electrolyte layer, an active material layer of negative electrode, and a current collector layer of negative electrode,
the active material layer of negative electrode comprising an active material of negative electrode for a lithium-ion secondary battery containing a carbon composite of a non-stoichiometric titanium compound obtained by applying carbon composite-forming process to a non-stoichiometric titanium compound represented by a chemical formula Li₄₊ₓTi_{5-x-y}Nb_{y}O₁₂ (where 0<x<0.30, 0<y<0.20) using, as a carbon source, dicarboxylic acid the carbon number of which is at least four.

17. The lithium-ion secondary battery according to any one of claims 13 to 16, the active material layer of positive electrode using one or more oxides selected from the group consisting of spinel type lithium manganese oxide (LiMn₂O₄), spinel type lithium manganese nickel oxide (LiMn_{1.5}Ni_{0.5}O₄), lithium cobalt oxide (LiCoO₂), lithium nickel oxide (LiNiO₂) lithium nickel cobalt manganese oxide (LiNi_{1/3}Mn_{1/3}Co_{1/3}O₂) , and lithium iron phosphate (LiFePO₄).
